(19) Europäisches Patentamt
European Patent Office
Office européen des brevets

(11) **EP 3 502 842 B1**

(12) **FASCICULE DE BREVET EUROPEEN**

(45) Date de publication et mention de la délivrance du brevet:
**13.05.2020 Bulletin 2020/20**

(51) Int Cl.:
*G06F 3/01* (2006.01)  *G01C 23/00* (2006.01)
*F41G 3/22* (2006.01)  *G02B 27/01* (2006.01)
*G02B 27/00* (2006.01)

(21) Numéro de dépôt: **18201354.0**

(22) Date de dépôt: **18.10.2018**

(54) **PROCEDE ET SYSTEME D'HARMONISATION DUALE D'UN SYSTEME D'AFFICHAGE TETE HAUTE PORTE POUR RENDRE CONFORME L'AFFICHAGE D'INFORMATIONS DE PILOTAGE D'UN AERONEF AVEC LE MONDE REEL EXTERIEUR**

VERFAHREN UND SYSTEM ZUR DUALEN HARMONISIERUNG EINES BORD-HEAD-UP-ANZEIGESYSTEMS FÜR DIE ANZEIGE VON STEUERINFORMATIONEN EINES LUFTFAHRZEUGS, DIE MIT DER REALEN AUSSENWELT ÜBEREINSTIMMEN

METHOD AND SYSTEM FOR DUAL HARMONISATION OF A WORN HEAD-UP DISPLAY SYSTEM TO ENSURE COMPLIANCE OF THE DISPLAY OF INFORMATION FOR PILOTING AN AIRCRAFT WITH THE REAL WORLD OUTSIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1701342**

(43) Date de publication de la demande:
**26.06.2019 Bulletin 2019/26**

(73) Titulaire: **Thales**
**92400 Courbevoie (FR)**

(72) Inventeurs:
• **AYMERIC, Bruno**
**33160 SAINT MEDARD EN JALLES (FR)**
• **ROUZES, Siegfried**
**33700 MERIGNAC (FR)**

(74) Mandataire: **Tanguy, Yannick et al**
**Marks & Clerk France**
**Conseils en Propriete Industrielle**
**Immeuble Visium**
**22, avenue Aristide Briand**
**94117 Arcueil Cedex (FR)**

(56) Documents cités:
**WO-A1-2015/165838    US-A1- 2015 317 838**

• **TUCERYAN M ET AL: "Single point active alignment method (SPAAM) for optical see-through HMD calibration for AR", AUGMENTED REALITY, 2000. (ISAR 2000). PROCEEDINGS. IEEE AND ACM INTERNATIONAL SYMPOSIUM ON MUNICH, GERMANY 5-6 OCT. 2000, PISCATAWAY, NJ, USA,IEEE, US, 5 octobre 2000 (2000-10-05), pages 149-158, XP010520324, DOI: 10.1109/ISAR.2000.880938 ISBN: 978-0-7695-0846-7**

EP 3 502 842 B1

**Description**

La présente invention concerne un procédé d'harmonisation duale d'un système d'affichage tête haute porté pour rendre conforme l'affichage d'informations de pilotage d'un aéronef avec le monde réel extérieur.

L'invention se situe dans le domaine technique de l'Interface Homme Système (IHS) de pilotage pour des aéronefs, comme par exemple des hélicoptères ou des avions, équipés d'un système d'affichage en tête haute ou monté sur casque (en anglais Head Worn Display HWD ou Helmet Mounted Display HMD) et d'un Dispositif de Détection de Posture de tête DDP.

Les dispositifs d'affichage en tête haute, qu'ils soient portés ou non, permettent d'afficher notamment une « symbologie » conforme au monde extérieur, c'est-à-dire un ensemble de symboles dont la position face à l'œil du pilote permet une superposition avec les éléments correspondants dans le monde extérieur. Il peut s'agir par exemple d'un vecteur de vitesse, d'une cible au sol ou en l'air, d'une représentation synthétique du terrain ou encore d'une image de capteur.

Cet affichage conforme nécessite de connaître la position et l'attitude de l'aéronef et, pour les dispositifs d'affichage portés sur la tête, l'attitude de l'afficheur par rapport à un repère fixe lié à l'aéronef. Ces différentes positions et attitudes sont fournies par les systèmes avioniques pour celles de l'aéronef, et par le Dispositif de Détection de posture DDP pour celles de l'afficheur.

Par exemple et notamment, les systèmes avioniques de fourniture de position et de l'attitude d'un aéronef peuvent être respectivement :

.- un dispositif de positionnement global de type GPS (en anglais Global Positionning System) ; et
.- un Système de Référence Inertielle IRS (en anglais Inertial Reference System) à base de gyroscopes et d'accéléromètres de type MEMS (en anglais Micro Electro Mechanical Systems) ou de gyroscope laser, ou un système de référence en attitude et en direction de cap AHRS (en anglais Attitude and Heading Reference System AHRS).

Un tel dispositif d'affichage en tête haute est décrit par exemple dans les documents WO 2015 / 165838 A1 et US 2015 / 0317838 A1. Un procédé d'harmonisation d'un dispositif d'affichage en tête haute basé sur des visées différentes est décrit dans le document de Tuceran et al. "Single point active alignment method (SPAAM) for optical see-through HMD calibration for AR", Proceedings of the IEEE and ACM International Symposium on Augmented Reality (ISAR 2000), Munich, Germany, 5-6 octobre 2000.

De manière connue, une harmonisation du système d'affichage tête haute porté est effectuée à l'installation du système d'affichage, dans un cockpit afin de calculer les corrections d'angles à apporter pour passer du repère afficheur au repère aéronef, et afin d'obtenir un affichage tête haute conforme.

Or, certains dispositifs d'affichage tête haute portés de nos jours présentent une certaine mobilité entre le dispositif d'affichage ou afficheur et la partie portée du système de détection de posture DDP, du fait d'une non rigidité mécanique entre ces deux éléments, i.e. l'afficheur et la partie portée mobile du DDP, par exemple lorsqu'un dispositif de basculement de l'afficheur seul en dehors du champ de vision de l'opérateur existe. Il convient alors lors d'un nouveau basculement de l'afficheur dans le champ de vision de l'opérateur, de procéder à nouveau à une harmonisation afin de calculer de nouvelles corrections d'angle à apporter à la tête une fois la tête haute installée et ainsi de pouvoir afficher une symbologie conforme dans le dispositif d'affichage porté sur la tête.

Afin de permettre et de faciliter ce besoin de ré-harmonisation relativement fréquent, il est connu d'installer à bord de l'aéronef un instrument dédié, dénommé unité d'axe de visée de référence ou unité de réticule d'axe de visée BRU (en anglais Boresight Reference Unit ou Boresight Reticle Unit).

L'unité d'axe de visée de référence BRU, installée dans le cockpit face à la tête de l'opérateur affiche un symbole collimaté avec une orientation fixe et connue du système tête haute.

A chaque besoin de recalage de la symbologie conforme, i.e. de ré-harmonisation, l'opérateur aligne un symbole affiché dans sa tête haute avec le symbole collimaté de l'unité d'axe de visée de référence BRU.

Lorsque le symbole affiché dans la tête haute, i.e. l'afficheur est aligné sur le symbole collimaté, le système d'harmonisation de la sortie du dispositif de détection calcule alors une matrice de rotation à partir de trois angles de correction, afin de ré-harmoniser l'attitude du repère de l'afficheur par rapport au repère de l'aéronef.

Le défaut principal de ce système d'harmonisation basée sur l'utilisation d'une unité d'axe de visée de référence BRU est l'emport d'un équipement supplémentaire dédié à cette seule fonction de recalage ou d'harmonisation est un coût en termes de complexité d'installation, un encombrement et un poids supplémentaires pouvant être rédhibitoires, en particulier pour les petits aéronefs civils. Cet équipement BRU doit être alimenté au travers d'un câblage électrique et installé de façon robuste. Cet équipement BRU requiert une procédure d'harmonisation longue lors de son installation avec un poste d'erreur supplémentaire. Un risque de désalignement par déplacement est possible par exemple lors de l'installation ou lors d'une opération de maintenance.

En outre, les paramètres exacts d'orientation de cette unité d'axe de visée de référence BRU sur le porteur, i.e. la structure porteuse de l'aéronef, doivent également être introduits dans le système d'affichage monté sur casque HMD, et l'unité BRU doit donc toujours rester parfaitement fixe par rapport au porteur. Or les technologies mécaniques actuelles ne permettent pas de garantir un montage de l'unité BRU dans le cockpit sans risque de variations au cours du temps. En effet l'environnement vibratoire, les interventions du pilote et des opérateurs de maintenance notamment peuvent provoquer de légères rotations ou déplacements de l'unité d'axe de visée de référence BRU, ce qui a pour conséquence d'introduire une erreur sur la ligne de visée non compensable et dans de nombreux cas non détectable, et donc d'empêcher toute ré-harmonisation ultérieure.

Un premier problème technique est de fournir un système d'affichage tête haute porté et un procédé d'harmonisation qui permette de recaler la symbologie sur le monde extérieur lorsque le système d'affichage ou de vision tête haute HWD/HMD dispose d'un mécanisme de dégagement et réengagement de l'afficheur dans le champ de vision du pilote, source de décalage, et d'éviter l'utilisation d'un amer de calibration installé à l'intérieur du cockpit, également source d'erreur.

Un deuxième problème technique est de déterminer avec plus de précision l'orientation relative M01 entre l'afficheur D0 et l'élément mobile de poursuite D2 du sous-système de détection de posture DDP de la tête lorsque le système d'affichage tête haute HWD/HMD dispose d'un mécanisme de dégagement et réengagement de l'afficheur dans le champ de vision du pilote.

Un troisième problème technique est de corriger l'orientation de l'aéronef fournie par sa station inertielle par rapport à la terre, en particulier pour le cap dont la valeur n'est généralement pas connue avec suffisamment de précision pour un affichage conforme.

A cet effet, l'invention a pour objet un procédé d'harmonisation duale d'un système d'affichage tête haute porté pour rendre conforme l'affichage d'informations de pilotage d'un aéronef avec le monde réel extérieur, le système d'affichage tête haute porté comprenant : un afficheur D0 tête haute porté transparent ; un sous-système de détection de posture de tête DDP ayant un premier élément mobile de poursuite D1, attaché solidairement à l'afficheur transparent D0, un deuxième élément fixe D2 lié solidairement à la plateforme de l'aéronef, et un moyen de mesure et de détermination de l'orientation relative M12 du premier élément mobile de poursuite D1 par rapport à un repère de référence du deuxième élément fixe D2 lié à la plateforme ; un dispositif inertiel d'attitude D3 de fourniture de l'attitude relative M3t de la plateforme par rapport à un repère terrestre lié à la Terre ; un sous-système d'harmonisation du système d'affichage tête haute porté pour rendre conforme l'affichage d'informations de pilotage sur l'afficheur D0 avec le monde réel extérieur, le sous-système d'harmonisation ayant un calculateur d'harmonisation duale et un Interface Homme Système pour gérer et réaliser la mise en œuvre du procédé d'harmonisation duale.

Le procédé d'harmonisation duale est caractérisé en ce qu'il comprend les étapes consistant à :

.- effectuer une série d'un nombre entier N supérieur ou égal à 3 de visées Vi différentes, i variant de 1 à N effectuées au travers de l'afficheur D0 en alignant un motif visuel centré de visée sur une même cible fixe quelconque du monde réel extérieur, chaque visée Vi correspondant à une position figée différente Pi du centre du motif de visée sur l'afficheur D0 et ayant un vecteur de visée $\overrightarrow{xi}$ déterminé en fonction de la position Pi, et pour chaque visée Vi acquérir la mesure correspondante $\widehat{Ki}$ de l'orientation angulaire relative de l'élément de poursuite par rapport à une direction de référence DDP, fixe par rapport à la plateforme de l'aéronef, puis

.- calculer la matrice d'orientation relative M01 entre l'afficheur D0 dans la position basculée et le premier élément de poursuite D1 comme la matrice droite $\hat{D}$ solution du système d'équations : $\hat{G}.\hat{K_i}.\hat{D}.\vec{x_i} = \vec{y_0}$ pour i = 1 à N, le vecteur $\vec{y_0}$ désignant le vecteur dans le repère inertiel de la plateforme correspondant au point cible visé dans le monde réel extérieur et

étant inconnu, et la matrice gauche $\hat{G}$ étant la matrice M23 d'orientation relative entre le repère du deuxième élément fixe D2, lié à la plateforme de l'aéronef et le repère du dispositif inertiel d'attitude D3, qui est potentiellement incorrecte mais supposée constante en fonction du temps, et qui lorsqu'elle est inconnue requiert au moins quatre mesures $\widehat{K_i}$.

Suivant des modes particuliers de réalisation, le procédé d'harmonisation duale comporte l'une ou plusieurs des caractéristiques suivantes, prises isolément ou en combinaison :

.- le nombre N de mesures est supérieur ou égal à trois et la matrice gauche $\hat{G}$ d'orientation relative entre le repère du deuxième élément fixe D2, lié à la plateforme de l'aéronef, et le repère du dispositif inertiel d'attitude D3 est connue, et la résolution du système d'équations $\hat{G}.\hat{K_i}.\hat{D}.\vec{x_i} = \vec{y_0}$, i variant de 1 à N, utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la matrice $\hat{D}$ et le vecteur $\vec{y_0}$ ;

.- l'étape de résolution du système d'équations comprend un premier ensemble de sous-étapes consistant à : dans une première sous-étape d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$ , $I_3$ désignant la matrice identité ; puis répéter une deuxième sous-étape itérative faisant passer de l'itération [s] à [s + 1] en calculant $\vec{y}_{[s+1]}$ puis $\hat{D}_{[s+1]}$ à l'aide des équations suivantes :

$$\vec{y}_{[s+1]} = \frac{\sum_{i \geq 1}(\hat{G} \cdot \hat{K}_i \cdot \hat{D}_{[s]} \cdot \vec{x}_i)}{\left\|\sum_{i \geq 1}(\hat{G} \cdot \hat{K}_i \cdot \hat{D}_{[s]} \cdot \vec{x}_i)\right\|}$$

$$\hat{D}_{[s+1]} = \pi\left(\sum_{i \geq 1}\left(\hat{K}_i^{\ T} \cdot \hat{G}^T \cdot \vec{y}_{[s+1]} \cdot \vec{x}_i^{\ T}\right)\right)$$

la suite $\{\vec{y}_{[s]}\}$ désignant une deuxième suite de vecteurs de direction externe, les suites $\{\vec{y}_{[s]}\}$ et $\{\hat{D}_{[s]}\}$ convergeant respectivement vers $\vec{y_0}$ et $\hat{D}$ ; puis arrêter dans une troisième sous-étape d'arrêt le processus itératif effectué au travers de la deuxième sous-étape lorsque les limites $\hat{D}$ et $\hat{G}$ sont approximées avec une précision suffisante définie par une ou deux valeurs seuil prédéterminées ;

.- le nombre N de mesures est égale à trois, et le motif visuel centré de visée est mis figé sur l'afficheur par le calculateur d'harmonisation à trois positions différentes P1, P2, P3 correspondant respectivement aux trois visées V1, V2, V3 : une première position P1 dans la partie gauche de l'afficheur et verticalement au centre, et une deuxième position P2 dans la partie droite de l'afficheur et verticalement au centre, et une troisième position P3 horizontalement au centre et vers le haut ;

.- le nombre N de mesures est supérieur ou égal à quatre et la matrice gauche $\hat{G}$ d'orientation relative entre le repère D2 lié à la plateforme de l'aéronef et le repère liée à la centrale inertielle D3 est inconnue, et ne cherchant pas à déterminer le vecteur $\vec{y_0}$, la résolution du système d'équations : $\hat{G}.\hat{K}_i \hat{D}.\vec{x}_i = \vec{y_0}$ i variant de 1 à N se ramène à la résolution du système d'équations: $\hat{K}_i \cdot D \cdot \vec{x}_i = \vec{z_0}$ pour i variant de 1 à 4, en notant $\vec{z_0} = \hat{G}^T \cdot \vec{y_0}$ laquelle résolution utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la matrice $\hat{D}$ ;

.- l'étape de résolution du système d'équations comprend un deuxième ensemble de sous-étapes consistant à : dans une quatrième sous-étape d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$, $I_3$ désignant la matrice identité ; puis répéter une cinquième sous-étape itérative faisant passer de l'itération [s] à [s + 1] en calculant la valeur $\vec{z}_{[s+1]}$, puis la valeur $\hat{D}_{[s+1]}$ de la première suite matricielle à l'aide des équations suivantes :

$$\vec{z}_{[s+1]} = \frac{\sum_{i \geq 1}(\hat{K}_i \cdot \hat{D}_{[s]} \cdot \vec{x}_i)}{\left\|\sum_{i \geq 1}(\hat{K}_i \cdot \hat{D}_{[s]} \cdot \vec{x}_i)\right\|}$$

$$\hat{D}_{[s+1]} = \pi\left(\sum_{i \geq 1}\left(\hat{K}_i^{\ T} \cdot \vec{z}_{[s+1]} \cdot \vec{x}_i^{\ T}\right)\right)$$

la suite $\{\vec{z}_{[s]}\}$ désignant une deuxième suite auxiliaire de vecteurs et la suite $\{\hat{D}_{[s]}\}$ convergeant D ; puis arrêter dans une sixième sous-étape d'arrêt le processus itératif effectué au travers de la cinquième sous-étape lorsque la limite $\hat{D}$ est approximée avec une précision suffisante définie par une valeur de seuil prédéterminée ;

.- le nombre N de mesures est égale à quatre, et le motif visuel centré de visée est mis figé sur l'afficheur par le calculateur d'harmonisation à quatre positions différentes P1, P2, P3, P4 correspondant respectivement aux quatre visées V1, V2, V3, V4 : une première position P1 dans la partie gauche de l'afficheur et verticalement au centre, et une deuxième position P2 dans la partie droite de l'afficheur et verticalement au centre, et une troisième position P3 horizontalement au centre et vers le haut, et une quatrième position P4 horizontalement au centre et vers le bas ;

.- la connaissance de la matrice M01 déterminée est exploitée pour recaler la symbologie en corrigeant l'erreur d'alignement entre l'afficheur et l'élément de poursuite du sous-système de détection de posture DDP ;
.- le motif visuel pourvu d'un point central est un réticule de la symbologie.

L'invention a également pour objet un système d'affichage tête haute porté pour rendre conforme l'affichage d'informations de pilotage d'un aéronef sur un afficheur avec le monde réel extérieur comprenant : un afficheur D0 tête haute porté transparent ; un sous-système de détection de posture de tête DDP ayant un premier élément mobile de poursuite D1, attaché solidairement à l'afficheur transparent D0, un deuxième élément fixe D2 lié solidairement à la plateforme de l'aéronef, et un moyen de mesure et de détermination de l'orientation relative M12 du premier élément mobile de poursuite D1 par rapport à un repère de référence du deuxième élément fixe D2 lié à la plateforme ; un dispositif inertiel d'attitude D3 de fourniture de l'attitude relative M3t de la plateforme par rapport à un repère terrestre lié à la Terre, fixé solidairement à la plateforme ; un sous-système d'harmonisation du système d'affichage tête haute porté pour rendre conforme l'affichage d'informations de pilotage sur l'afficheur D0 avec le monde réel extérieur, le sous-système d'harmonisation ayant un calculateur d'harmonisation duale et un Interface Homme Système pour gérer et réaliser la mise en œuvre du procédé d'harmonisation duale.

Le système d'affichage tête haute porté est caractérisé en ce que le sous-système d'harmonisation est configuré pour : effectuer une série d'un nombre entier N supérieur ou égal à 3 de visées Vi différentes, i variant de 1 à N, effectuées au travers de l'afficheur D0 en alignant un motif visuel centré de visée sur une même cible fixe quelconque du monde réel extérieur, chaque visée Vi correspondant à une position figée différente Pi du centre du motif de visée sur l'afficheur D0 et ayant un vecteur de visée $\vec{x_i}$ déterminé en fonction de la position Pi, et pour chaque visée Vi acquérir la mesure correspondante $\widehat{K_i}$ de l'orientation angulaire relative de l'élément de poursuite par rapport à une direction de référence DDP, fixe par rapport à la plateforme de l'aéronef ; puis calculer la matrice d'orientation relative M01 entre l'afficheur D0 dans la position basculée et le premier élément de poursuite D1 comme la matrice droite $\hat{D}$ solution du système d'équations :
$\hat{G}.\hat{K_i}.\hat{D}.\vec{x_i} = \vec{y_0}$ pour i = 1 à N, le vecteur $\vec{y_0}$ désignant le vecteur dans le repère inertiel de la plateforme correspondant au point cible visé dans le monde réel extérieur et étant inconnu, et la matrice gauche $\hat{G}$ étant la matrice M23 d'orientation relative entre le repère du deuxième élément fixe D2, lié à la plateforme de l'aéronef et le repère du dispositif inertiel d'attitude D3, qui est potentiellement incorrecte mais supposée constante en fonction du temps, et qui lorsqu'elle est inconnue requiert au moins quatre mesures $\widehat{K_i}$ .

Suivant des modes particuliers de réalisation, le système d'affichage tête haute comporte l'une ou plusieurs des caractéristiques suivantes, prises isolément ou en combinaison :

.- le nombre N de mesures est supérieur ou égal à trois et la matrice gauche $\hat{G}$ d'orientation relative entre le repère lié D2 à la plateforme de l'aéronef et le repère liée à la centrale inertielle D3 est connue ; et la résolution du système d'équations $\hat{G}.\hat{K_i}.\hat{D}.\vec{x_i} = \vec{y_0}$ i variant de 1 à N utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - A sur l'ensemble des matrice de rotation 3 x3, pour déterminer la matrice $\hat{D}$ et le vecteur $\vec{y_0}$ ;

.- l'étape de résolution du système d'équations comprend un premier ensemble de sous-étapes consistant à : dans une première sous-étape d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$, $I_3$ désignant la matrice identité ; puis répéter une deuxième sous-étape itérative faisant passer de l'itération [s] à [s + 1] en calculant $\vec{y}_{[s+1]}$ puis $\hat{D}_{[s+1]}$ à l'aide des équations suivantes :

$$\vec{y}_{[s+1]} = \frac{\sum_{i\geq 1}(\widehat{G} \cdot \widehat{K}_i \cdot \widehat{D}_{[s]} \cdot \vec{x}_i)}{\left\|\sum_{i\geq 1}(\widehat{G} \cdot \widehat{K}_i \cdot \widehat{D}_{[s]} \cdot \vec{x}_i)\right\|}$$

$$\widehat{D}_{[s+1]} = \pi\left(\sum_{i\geq 1}\left(\widehat{K}_i{}^T \cdot \widehat{G}^T \cdot \vec{y}_{[s+1]} \cdot \vec{x}_i{}^T\right)\right)$$

la suite $\{\vec{y}_{[s]}\}$ désignant une deuxième suite de vecteurs de direction externe, les suites $\{\vec{y}_{[s]}\}$ et $\{\hat{D}_{[s]}\}$ convergeant

respectivement vers $\vec{y_0}$ et $\hat{D}$ ; puis arrêter dans une troisième sous-étape d'arrêt le processus itératif effectué au travers de la deuxième sous-étape lorsque les limites $\hat{D}$ et $\hat{G}$ sont approximées avec une précision suffisante définie par une ou deux valeurs seuil prédéterminées ;

.- le nombre N de mesures est supérieur ou égal à quatre et la matrice gauche $\hat{G}$ d'orientation relative entre le repère lié D2 à la plateforme de l'aéronef et le repère liée à la centrale inertielle D3 est inconnue, et ne cherchant pas à déterminer le vecteur $\vec{y_0}$, la résolution du système d'équations : $\hat{G}.\hat{K_i}.\hat{D}.\vec{x_i} = \vec{y_0}$ i variant de 1 à N se ramène à la résolution du système d'équations: $\hat{K_i}.\hat{D}.\vec{x_i} = \vec{z_0}$ pour i variant de 1 à 4, en notant $\vec{z_0} = \hat{G}^T.\vec{y_0}$ laquelle résolution utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la matrice $\hat{D}$ ;

.- l'étape de résolution du système d'équations comprend un deuxième ensemble de sous-étapes consistant à : dans une quatrième sous-étape d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$ , $I_3$ désignant la matrice identité ; puis répéter une cinquième sous-étape itérative faisant passer de l'itération [s] à [s + 1] en calculant la valeur $\vec{z}_{[s+1]}$, puis la valeur $\{\hat{D}_{[s+1]}\}$ de la première suite matricielle à l'aide des équations suivantes :

$$\vec{z}_{[s+1]} = \frac{\sum_{i \geq 1}\left(\widehat{K}_i \cdot \widehat{D}_{[s]} \cdot \vec{x}_i\right)}{\left\|\sum_{i \geq 1}\left(\widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i{}^T \cdot \vec{z}_{[s+1]} \cdot \vec{x}_i{}^T\right)\right)$$

la suite $\{\vec{z}_{[s]}\}$ désignant une deuxième suite auxiliaire de vecteurs et la suite $\{\hat{D}_{[s]}\}$ convergeant $\hat{D}$ ; puis arrêter dans une sixième sous-étape d'arrêt le processus itératif effectué au travers de la cinquième sous-étape lorsque la limite $\hat{D}$ est approximée avec une précision suffisante définie par une valeur de seuil prédéterminée.

L'invention sera mieux comprise à la lecture de la description de plusieurs formes de réalisation qui va suivre, donnée uniquement à titre d'exemple et faite en se référant aux dessins sur lesquels :

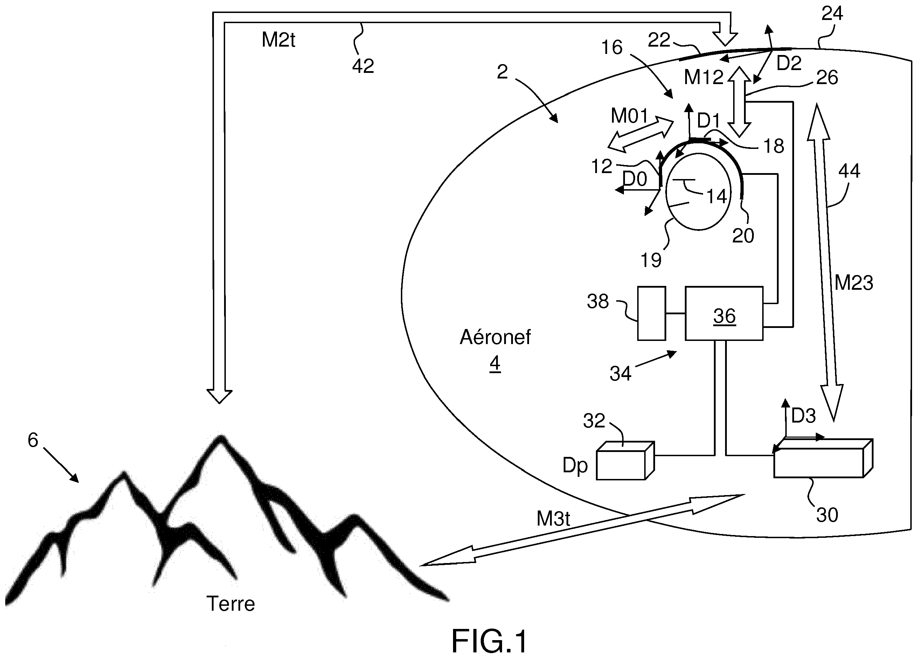

.- la Figure 1 est une vue d'un système d'affichage tête haute porté selon l'invention pour rendre conforme l'affichage d'informations de pilotage d'un aéronef qui permet d'harmoniser toutes les composantes du système d'affichage tête haute sans avoir à utiliser une unité d'axe de visée de référence ou unité de réticule d'axe de visée BRU, servant d'amer de calibration à l'intérieur du cockpit ;

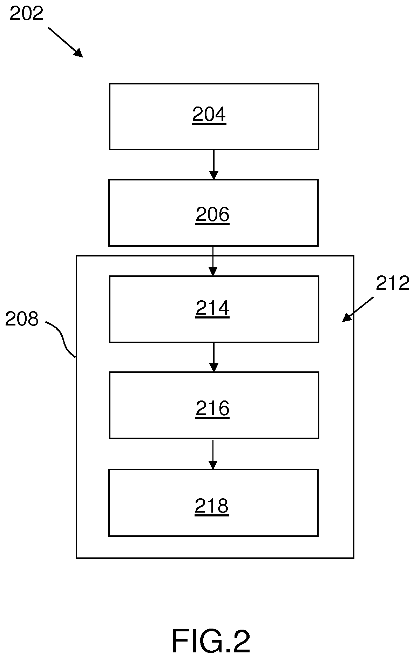

.- la Figure 2 est un ordinogramme d'un premier mode de réalisation d'un procédé d'harmonisation selon l'invention du système d'affichage tête haute porté de la Figure 1 ;

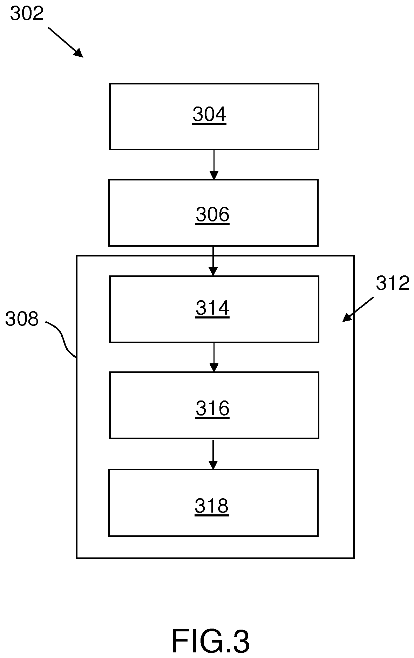

.- la Figure 3 est un ordinogramme d'un deuxième mode de réalisation d'un procédé d'harmonisation selon l'invention du système d'affichage tête haute porté de la Figure 1.

Suivant la Figure 1, un système d'affichage tête haute 2 selon l'invention pour rendre conforme l'affichage d'informations de pilotage d'un aéronef 4 sur un afficheur avec le monde réel extérieur 6 comprend les dispositifs et moyens suivants :

.- un dispositif d'affichage ou afficheur 12 tête haute porté transparent, désigné par D0, positionné devant l'œil 14 d'un pilote et pouvant lui servir de viseur, par exemple une lentille ;

.- un sous-système de détection de posture 16 DDP, ayant un premier élément mobile de poursuite 18, désigné par D1, attaché rigidement à la tête 19 ou au casque 20 du pilote et attaché rigidement à l'afficheur D0 lorsque l'afficheur D0 est mis dans le champ de vision du pilote, un deuxième élément fixe 22 D2, lié solidairement à la plateforme 24 (désignée également par « pl ») de l'aéronef 4 et servant de repère de référence vis-à-vis du sous-système de détection de posture 16 DDP, et un moyen 26 de mesure et de détermination de l'orientation relative M12 du premier élément mobile de poursuite 18 D1 par rapport à un repère de référence du deuxième élément fixe 22 D2 lié à la plateforme,

.- un dispositif inertiel d'attitude 30 D3, par exemple une centrale inertielle AHRS, de fourniture de l'attitude relative M3t de la plateforme par rapport à un repère terrestre « t » lié à la Terre, fixé à la plateforme,

.- un dispositif 32 Dp de fourniture de la position de l'aéronef par rapport au repère terrestre lié à la Terre, par exemple un système de positionnement par satellite de type GPS ou un système de radionavigation ;

.- un sous-système d'harmonisation 34 duale du système d'affichage tête haute 2 pour rendre conforme l'affichage d'informations de pilotage sur l'afficheur D0 avec le monde réel extérieur, le sous-système d'harmonisation 34 ayant un calculateur d'harmonisation duale 36 et un Interface Homme Système 38 pour gérer et réaliser la mise en œuvre du procédé d'harmonisation duale.

Le calculateur d'harmonisation duale 36 peut être un calculateur électronique dédié spécifiquement à la mise en œuvre du procédé d'harmonisation duale ou un calculateur électronique à vocation plus générale prévu pour mettre en œuvre également d'autres fonctions du système d'affichage tête haute 2.

De même, l'Interface Homme Système 38 peut être un interface Homme Système dédiée uniquement à la réalisation du procédé d'harmonisation ou un interface Homme Système plus général réalisant de manière partagée d'autres fonctions du système d'affichage tête haute 2.

Le système d'affichage comporte également un moyen 42 pour définir, mesurer ou déterminer l'orientation angulaire relative M2t du deuxième élément fixe 22 D2 par rapport à la Terre, et un moyen 44 permettant de connaitre l'orientation relative M23 du deuxième élément fixe 22 D2, lié à la plateforme 24, par rapport au dispositif inertiel d'attitude 30 D3.

Le moyen 44 est mis en œuvre sous la forme d'une procédure réalisée à l'installation du système d'affichage tête haute porté 2 et l'orientation M23 est supposée constante dans le temps.

Le moyen 42 utilise les données du dispositif inertiel d'attitude D3, attaché à la plateforme de l'aéronef et configuré pour mesurer sa propre orientation M3t par rapport à la Terre, et l'orientation angulaire M23 fourni par le moyen 44.

Les informations conformes de pilotage comprennent par exemple un vecteur vitesse, une cible au sol, une représentation synthétique du terrain ou encore d'une image d'un capteur électromagnétique, par exemple d'un capteur infrarouge.

Il est à remarquer que dans l'état de l'art actuel des systèmes d'affichage tête haute, le sous-système de détection de posture 16 DDP est relativement complexe en pratique car il met en œuvre deux mesures :

.- une mesure inertielle de l'orientation angulaire relative M2t du deuxième élément fixe D2 par rapport à la Terre, et

.- une mesure directe de l'orientation relative du premier élément mobile de poursuite D1 par rapport au deuxième élément fixe D2, souvent sous la forme d'un traitement d'images,

et utilise la connaissance de l'orientation relative M2t du deuxième élément fixe D2 par rapport à la Terre. Toutefois, si cette particularité rend les algorithmes plus complexes, cette particularité n'a pas d'impact sur le système d'affichage tête haute et le procédé d'harmonisation duale de la présente invention, et on pourra considérer par la suite que l'orientation relative M12 du premier élément de poursuite D1 par rapport au deuxième élément fixe D2 est simplement fourni par une mesure directe du sous-système de détection de posture DDP.

Ici et suivant un mode de réalisation préférée par la suite, le sous-système de détection de posture 16 DDP est configuré pour fournir des données brutes de sortie DDP issues prioritairement des mesures directes optiques de l'orientation relative entre le premier élément de poursuite D1 par rapport au deuxième élément fixe D2.

Il est à remarquer également qu'ici pour des raisons de simplification, la plateforme et le dispositif inertiel d'attitude D3 sont assimilés. De manière générale, le moyen 44 de fourniture de l'orientation relative M23 est configuré pour réaliser cette fonction en deux étapes : une première étape de passage par la plateforme dans laquelle le repère triaxial du dispositif inertiel d'attitude D3 est « aligné » sur le repère triaxial de la plateforme, puis une deuxième étape dans laquelle l'orientation du deuxième élément fixe D2 est harmonisée sur le repère de la plateforme.

Ces remarques sont sans incidence ici sur le contenu de la présente invention.

Par la suite, les moyens Mij permettant de connaitre l'orientation relative d'un repère « i » à un autre «j » sont assimilés dans la suite de ce document à la matrice décrivant cette orientation. En effet, l'orientation Mij d'un repère par rapport à un autre peut être décrite indifféremment par :

.- trois angles appelés angles d'Euler, qui conventionnellement en aéronautique, correspondant à l'ordre des rotations pour ces angles suivant :

- * Gisement : rotation autour de l'axe z qui est orienté vers le bas (ou vers la Terre) ;
- * Site : rotation autour de l'axe y qui est orienté vers la droite (ou vers l'est de la Terre) ;
- * Roulis : rotation autour de l'axe x qui est orienté vers l'avant (ou vers le nord de la Terre),

.- une matrice 3x3 décrivant cette rotation.

Par la suite, la matrice Mij pourra être notée également M(i/j), la matrice Mij ou M(i/j) décrivant l'orientation relative du repère « i » par rapport à « j » (ou de « i » vers « j »). Si vi est l'expression d'un vecteur dans le repère « i » et vj l'expression de ce vecteur dans le repère « j », alors on a la relation. Par conséquent on la relation : vi = M(i/j) * vj et la relation de passage entre repères : M(i/k) (de i vers k) = M(j/k) * M(i/j)

Le principe de base du procédé d'harmonisation du système d'affichage tête haute selon l'invention repose sur l'utilisation d'un élément prédéterminé du paysage extérieur terrestre servant d'amer et un certain nombre de visées consistant à aligner ou superposer un réticule de la symbologie, fixe vis-à-vis de l'afficheur, sur cet élément extérieur suivant un nombre de positions du réticule sur l'afficheur qui dépend des degrés de liberté entachés d'erreur de l'orientation angulaire relative de l'afficheur D0 vis-à-vis du premier élément mobile de poursuite D1 du sous-système de détection de posture solidaire de la tête.

Suivant la Figure 2, un procédé d'harmonisation duale du système d'affichage tête haute porté pour rendre conforme l'affichage d'informations de pilotage d'un aéronef sur l'afficheur avec le monde extérieur terrestre comprend un ensemble d'étapes.

Dans une première étape de lancement 204, un déclenchement de la procédure d'harmonisation de l'affichage d'informations conformes avec le monde extérieur terrestre est actionné par l'utilisateur du système d'affichage tête haute portée, par exemple par un appui maintenu sur un bouton situé dans le cockpit et dédié à ce recalage. Le système d'affichage est alors mis dans un mode d'harmonisation.

Puis, dans une deuxième étape 206 d'acquisitions de mesures de visées, un motif visuel centré de visée, par exemple un réticule de la symbologie, est mis figé sur l'afficheur par le calculateur à différentes positions, par exemple les trois positions différentes suivantes : (P1) gauche de l'afficheur et verticalement au centre, (P2) droite de l'afficheur et verticalement au centre, puis (P3) horizontalement au centre et vers le haut. Dans la même deuxième étape 206, les visées correspondantes, désignées respectivement par V1, V2, V3 sont effectuées en alignant ou superposant le réticule, mis aux différentes positions P1, P2, P3 sur l'afficheur, sur un élément prédéterminé du paysage extérieur réel terrestre servant d'amer. Ces visées V1, V2, V3 doivent être réalisées en prenant du roulis de tête : une fois à droite autour de l'axe de roulis, c'est-à-dire l'axe de visée, une fois à gauche autour de l'axe de roulis. Pour une performance optimale, chaque position du réticule peut donner lieu à deux visées : tête penchée à gauche puis à droite, mais cette condition n'est pas nécessaire pour effectuer une harmonisation de qualité.

Pour chaque visée Vi , i variant de 1 à 3, une matrice de mesure correspondante Ki, i variant de 1 à 3, d'orientation relative de la partie mobile D1 du sous-système de détection de posture DDP par rapport au dispositif D2 formant la partie fixe du sous-système est mesuré par le sous-système de détection de posture DDP et calculé par le sous-système lui-même ou le calculateur électronique d'harmonisation qui lui est connecté.

Ensuite, dans une troisième étape 208, le calculateur d'harmonisation résout l'équation d'harmonisation duale suivante: $\hat{G} \cdot \hat{K}_i \cdot \hat{D} \cdot \vec{x}_i = \vec{y}_0$, dans laquelle :

.- la matrice G de correction à gauche qui n'est autre que notre matrice M23, de passage du dispositif D2 (repère fiduciel) vers la centrale inertielle du dispositif D3 ;

.- les matrices Ki sont les matrices de mesures correspondant aux données du sous-système de détection de posture DDP pour chaque visée V1, V2, V3 et les mêmes matrices M12i correspondantes à chaque visée ;

.- la matrice D de correction à droite est la matrice M01 que l'on cherche ici permettant de passer de l'afficheur D0 à l'élément de suivi ou poursuite angulaire D1 ;

.- les vecteurs xi sont les vecteurs correspondant à la position Pi du réticule de visée pour chaque visée Vi, i variant de 1 à 3. Si le réticule se trouvant à la position Pi est affiché au gisement $xi°$ et site $yi°$, le vecteur xi exprimé dans le repère de l'afficheur est un vecteur colonne $[\cos(xi°) \cdot \cos(yi°) ; \sin(xi°) \cdot \cos(yi°) ; -\sin(yi°)]$.

.- le vecteur y0 est le vecteur dans le repère de la centrale inertielle correspondant au point visé dans le monde extérieur servant d'amer. Par exemple, un point visé servant d'amer situé exactement dans l'axe de la centrale inertielle D3 aura les coordonnées (1 ;0 ;0).

Pour résoudre l'équation d'harmonisation, la troisième étape 208 utilise les algorithmes des cinquième et sixième modes de réalisation décrits dans la demande de brevet français, intitulée « Procédé et système d'harmonisation duale globale d'un système de détection de posture » et déposée à la même date que la présente demande de brevet français, selon que le calcul de la direction y0 est souhaitée ou pas.

Lorsque le calcul de la direction y0 est souhaité, la matrice G doit être connue et les coordonnées doivent être exprimées dans le repère de G, la troisième étape 208 utilise le cinquième mode de réalisation de l'algorithme d'harmonisation duale décrit dans la demande de brevet intitulée « Procédé d'harmonisation duale d'un sous-système de détection de posture intégré dans un système de visualisation tête haute porté » et met en œuvre un premier ensemble 212 de première, deuxième, troisième sous-étapes 214, 216, 218 de calcul.

Le cinquième mode de réalisation de l'algorithme d'harmonisation duale résout au travers des première, deuxième, troisième sous-étapes 214, 17216, 218 de calcul le système d'équations : $\hat{G}.\hat{K}_i\hat{D}.\vec{x}_i = \vec{y}_0$ pour i variant de 1 à 3.

Dans la première sous-étape 214 d'initialisation, on initialise une première suite de matrices droites $\{\hat{D}_{[s]}\}$ en mettant $\hat{D}_{[0]}$ égal à $I_3$ , $I_3$ désignant la matrice identité.

Puis on répète la deuxième sous-étape itérative 226 faisant passer de l'itération [s] à [s + 1] en calculant $\vec{y}_{[s+1]}$ puis $\hat{D}_{[s+1]}$ à l'aide des équations suivantes :

$$\vec{y}_{[s+1]} = \frac{\sum_{i \geq 1}\left(\widehat{G} \cdot \widehat{K}_i \cdot \widehat{D}_{[s]} \cdot \vec{x}_i\right)}{\left\|\sum_{i \geq 1}\left(\widehat{G} \cdot \widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^{\ T} \cdot \widehat{G}^T \cdot \vec{y}_{[s+1]} \cdot \vec{x}_i^{\ T}\right)\right)$$

la suite $\{\vec{y}_{[s]}\}$ désignant une deuxième suite de vecteurs de direction externe.

Les suites $\{\vec{y}_{[s]}\}$ et $\{\hat{D}_{[s]}\}$ convergent respectivement vers $\vec{y}_0$ et $\hat{D}$

Dans la troisième sous-étape d'arrêt 218, on arrête le processus itératif effectué au travers de la deuxième sous-étape 216 lorsque les limites $\hat{D}$ et $\hat{G}$ sont approximées avec une précision suffisante.

Il est à remarquer que le cinquième mode de configuration du calcul d'harmonisation duale exige comme contraintes d'utilisation que le nombre minimum de mesures N est supérieur ou égal à 3 et que la famille vectorielle $\{\vec{x}_i\}$ est libre. Cela signifie qu'en variante du procédé d'harmonisation du procédé d'harmonisation duale de l'affichage décrit à la Figure 2 dans lequel le nombre de mesures est égal à 3, le procédé d'harmonisation duale selon le premier mode de réalisation peut également acquérir un nombre strictement supérieur à 3 de mesures Ki, c'est-à-dire de visée Vi, sous réserve que la la famille vectorielle $\{\vec{x}_i\}$ est libre et traiter les mesures Ki en utilisant le sixième mode de réalisation de l'algorithme d'harmonisation duale.

Suivant la Figure 3 et un deuxième mode de réalisation, un procédé 302 d'harmonisation de l'affichage d'informations de pilotage sur l'afficheur conformes avec le monde extérieur terrestre comprend un deuxième ensemble 303 de quatrième, cinquième, sixième étapes 304, 306, 308.

Dans la quatrième étape 304 de lancement, identique à la première étape 204, un déclenchement de la procédure d'harmonisation 302 de l'affichage d'informations conformes avec le monde extérieur terrestre est actionné par l'utilisateur du système d'affichage tête haute portée, par exemple par un appui maintenu sur un bouton situé dans le cockpit et dédié à ce recalage. Le système d'affichage est alors mis dans un mode d'harmonisation.

Puis, dans la cinquième étape 306 d'acquisitions de mesures de visées, un réticule de la symbologie est mis figé sur l'afficheur par le calculateur d'harmonisation à quatre différentes positions, par exemple les quatre positions différentes suivantes: (P1) gauche de l'afficheur et verticalement au centre, (P2) droite de l'afficheur et verticalement au centre, (P3) horizontalement au centre et vers le haut, puis (P4) horizontalement au centre et vers le bas. Dans la même cinquième étape 206, les visées correspondantes, désignées respectivement par V1, V2, V3, V4 sont effectuées en alignant ou superposant le réticule, mis aux différentes positions P1, P2, P3, P4 sur l'afficheur, sur un élément prédéterminé du paysage extérieur réel terrestre servant d'amer. Ces visées V1, V2, V3, V4 doivent être réalisées en prenant du roulis de tête : une fois à droite autour de l'axe de roulis, c'est-à-dire l'axe de visée, une fois à gauche autour de l'axe de roulis. Pour une performance optimale, chaque position du réticule peut donner lieu à deux visées : tête penchée à gauche puis à droite, mais cette condition n'est pas nécessaire pour effectuer une harmonisation de qualité.

Pour chaque visée Vi , i variant de 1 à 3, une matrice de mesure correspondante Ki, i variant de 1 à 4, d'orientation relative de la partie mobile D1 du sous-système de détection de posture DDP par rapport au dispositif D2 formant la partie fixe du sous-système est mesuré par le sous-système de détection de posture DDP et calculé par le sous-système lui-même ou le calculateur électronique d'harmonisation qui lui est connecté.

Ensuite, dans la sixième étape 308, le calculateur d'harmonisation résout le système d'équations d'harmonisation duale suivant : $\hat{G} \cdot \hat{K}_i \cdot \hat{D} \cdot \vec{x}_i = \vec{y}_0$, dans laquelle :

.- la matrice G de correction à gauche qui n'est autre que notre matrice M23, de passage du dispositif D2 (repère fiduciel) vers la centrale inertielle du dispositif D3 ;

.- les matrices Ki sont les matrices de mesures correspondant aux données du sous-système de détection de posture DDP pour chaque visée V1, V2, V3, V4 et les mêmes matrices M12i correspondantes à chaque visée ;

.- la matrice D de correction à droite est la matrice M01 que l'on cherche ici permettant de passer de l'afficheur D0 à l'élément de suivi ou poursuite angulaire D1 ;

.- les vecteurs xi sont les vecteurs correspondant à la position Pi du réticule de visée pour chaque visée Vi, i variant de 1 à 4. Si le réticule se trouvant à la position Pi est affiché au gisement xi° et site yi°, le vecteur xi exprimé dans le repère de l'afficheur est un vecteur colonne [cos(xi°)*cos(yi°) ; sin(xi°)*cos(yi°) ; -sin(yi°)].

.- le vecteur y0 est le vecteur dans le repère de la centrale inertielle correspondant au point visé dans le monde extérieur servant d'amer. Par exemple, un point visé servant d'amer situé exactement dans l'axe de la centrale inertielle D3 aura les coordonnées (1 ;0 ;0).

Ici, le système d'équations d'harmonisation duale à résoudre diffère de celui du deuxième mode de réalisation du procédé d'harmonisation en ce que :

.- le nombre de visées Vi est égal à 4, la famille des vecteurs $\{\vec{x_i}\}$ étant libre,

.- on ne connait pas la matrice G et on peut prendre n'importe quel matrice G ; et

.- on ne cherche pas à calculer la direction de l'amer y0.

Dans ce cas, pour résoudre l'équation d'harmonisation, la sixième étape 308 utilise l'algorithme de la sixième configuration décrit dans la demande de brevet français, intitulée « Procédé et système d'harmonisation duale globale d'un système de détection de posture » et déposée à la même date que la présente demande de brevet français, et met en œuvre un du deuxième ensemble 312 de quatrième, cinquième, sixième sous-étapes 314, 316, 318, de calcul.

L'algorithme d'harmonisation duale de résolution de la sixième configuration ramène la résolution du système d'équations : $\vec{G}.\hat{K_i}\hat{D}.\vec{x_i} = \vec{y_0}$ pour i variant de 1 à 4, à la résolution du système d'équations : $K_i \cdot \hat{D} \cdot \vec{x_i} = \vec{z_0}$ pour i variant de 1 à 4, en notant $\vec{z_0} = \hat{G}^T \cdot \vec{y_0}$,

Dans la quatrième sous-étape 314, on initialise une première suite de matrices droites $\{\hat{D}_{[s]}\}$ en mettant $\hat{D}_{[0]}$ égal à $I_3$ , $I_3$ désignant la matrice identité.

Puis on répète la cinquième sous-étape itérative 416 faisant passer de l'itération [s] à [s + 1] en calculant $\vec{z}_{[s+1]}$ puis $\hat{D}_{[s+1]}$ à l'aide des équations suivantes :

$$\vec{z}_{[s+1]} = \frac{\sum_{i\geq1}\left(\hat{K}_i \cdot \hat{D}_{[s]} \cdot \vec{x}_i\right)}{\left\|\sum_{i\geq1}\left(\hat{K}_i \cdot \hat{D}_{[s]} \cdot \vec{x}_i\right)\right\|}$$

$$\hat{D}_{[s+1]} = \pi\left(\sum_{i\geq1}\left(\hat{K}_i^T \cdot \vec{z}_{[s+1]} \cdot \vec{x}_i^T\right)\right)$$

la suite $\{\vec{z}_{[s]}\}$ désignant une deuxième suite de vecteurs de direction externe.

La suites $\{\hat{D}_{[s]}\}$ converge vers $\hat{D}$.

Dans la sixième sous-étape d'arrêt 418, on arrête le processus itératif effectué au travers de la cinquième sous-étape 316 lorsque la limite D est approximée avec une précision suffisante.

Il est à remarquer que l'algorithme d'harmonisation duale de la sixième configuration exige comme contraintes d'utilisation que le nombre minimum de mesures N est supérieur ou égal à 4 et que la famille vectorielle $\{\vec{x_i}\}$ est libre. Cela signifie qu'en variante du procédé 302 d'harmonisation duale de l'affichage décrit à la Figure 3 dans lequel le nombre de mesures est égal à 4, un procédé d'harmonisation duale selon l'invention peut également acquérir un nombre strictement supérieur à 4 de mesures Ki, c'est-à-dire de visée Vi, sous réserve que la la famille vectorielle $\{\vec{x_i}\}$ est libre et traiter les mesures Ki en utilisant le sixième mode de réalisation de l'algorithme d'harmonisation duale.

Ainsi, la connaissance de l'orientation d'une unité BRU par rapport au porteur a été est remplacée par l'hypothèse d'identité de la direction fiducielle à différentes visées. Ainsi la matrice de rotation M03 d'orientation de l'afficheur par rapport au repère fiduciel D2, si elle est inconnue dans l'absolu, est identique lors des différentes visées. En exploitant :

.- la mesure de la matrice M12 de l'orientation relative de l'élément mobile de poursuite D1 par rapport à l'élément fixe D2 du sous-système de détection de posture DDP, et

.- la connaissance de la matrice M23, i.e. la matrice gauche G, potentiellement incorrecte mais supposée constante,

on peut déterminer la matrice M01 d'orientation relative de l'afficheur D0 vis-à-vis de l'élément de poursuite mobile du sous-système de détection de posture DDP telle que pour chaque mesure : M12 * M01 * vecteurVisée = vecteurConstant. Ici les vecteurs de visées sont les vecteurs formant la famille $\{\vec{x_i}\}$.

De manière avantageuse, en plus de l'économie d'un instrument de calibration telle que le BRU et surtout de son installation complexe, le procédé d'harmonisation duale selon l'invention permet d'obtenir une meilleure précision d'alignement que celle fournie par utilisation d'un BRU, en particulier sur l'harmonisation en roulis.

Le procédé d'harmonisation duale décrit ci-dessus permet également de s'affranchir des erreurs et dérives d'orientation relative entre un BRU et le dispositif inertiel D3.

## Revendications

**1.** Procédé d'harmonisation duale d'un système d'affichage tête haute porté pour rendre conforme l'affichage d'informations de pilotage d'un aéronef avec le monde réel extérieur, le système d'affichage tête haute porté comprenant :

- un afficheur (12) D0 tête haute porté transparent,
- un sous-système de détection de posture de tête DDP (16) ayant un premier élément mobile de poursuite D1 (18) attaché solidairement à l'afficheur transparent (12) D0, un deuxième élément fixe D2 (22) lié solidairement à la plateforme (24) de l'aéronef, et un moyen (26) de mesure et de détermination de l'orientation relative M12 du premier élément mobile de poursuite (18) D1 par rapport à un repère de référence du deuxième élément fixe (22) D2 lié à la plateforme (24),
- un dispositif inertiel d'attitude (30) D3 de fourniture de l'attitude relative M3t de la plateforme (24) par rapport à un repère terrestre lié à la Terre,
- un sous-système d'harmonisation (34) du système d'affichage tête haute porté pour rendre conforme l'affichage d'informations de pilotage sur l'afficheur D0 avec le monde réel extérieur, le sous-système d'harmonisation (34) ayant un calculateur d'harmonisation duale et un Interface Homme Système pour gérer et réaliser la mise en œuvre du procédé d'harmonisation duale,

le procédé d'harmonisation duale étant **caractérisé en ce qu'**il comprend les étapes consistant à
- effectuer (206 ; 306) une série d'un nombre entier N supérieur ou égal à 3 de visées Vi différentes, i variant de 1 à N effectuées au travers de l'afficheur D0 en alignant un motif visuel centré de visée sur une même cible fixe quelconque du monde réel extérieur, chaque visée Vi correspondant à une position figée différente Pi du centre du motif de visée sur l'afficheur D0 et ayant un vecteur de visée $\vec{xi}$ déterminé en fonction de la position Pi, et pour chaque visée Vi acquérir (206 ; 306) la mesure correspondante $\widehat{Ki}$ de l'orientation angulaire relative de l'élément de poursuite par rapport à une direction de référence DDP, fixe par rapport à la plateforme de l'aéronef, puis
- calculer (206 ; 306) la matrice d'orientation relative M01 entre l'afficheur D0 dans la position basculée et le premier élément de poursuite D1 comme la matrice droite $\hat{D}$ solution du système d'équations :

$$\hat{G}.\widehat{K_i}\hat{D}.\vec{x}_i = \vec{y}_0 \text{ pour i = 1 à N,}$$

le vecteur $\vec{y_0}$ désignant le vecteur dans le repère inertiel de la plateforme correspondant au point cible visé dans le monde réel extérieur et étant inconnu ; et
la matrice gauche $\hat{G}$ étant la matrice M23 d'orientation relative entre le repère du deuxième élément fixe D2, lié à la plateforme de l'aéronef et le repère du dispositif inertiel d'attitude D3, qui est potentiellement incorrecte mais supposée constante en fonction du temps, et qui lorsqu'elle est inconnue requiert au moins quatre mesures $\widehat{K_i}$.

**2.** Procédé d'harmonisation duale d'un système d'affichage tête haute porté pour rendre conforme l'affichage d'informations de pilotage d'un aéronef avec le monde réel extérieur selon la revendication 1, dans lequel le nombre N de mesures est supérieur ou égal à trois et la matrice gauche $\hat{G}$ d'orientation relative entre le repère du deuxième élément fixe D2, lié à la plateforme de l'aéronef, et le repère du dispositif inertiel d'attitude D3 est connue, et
la résolution du système d'équations $\hat{G}.\hat{K_i}\hat{D}.\vec{x}_i = \vec{y}_0,$ i variant de 1 à N utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la matrice $\hat{D}$ et le vecteur $\vec{y_0}$.

3. Procédé d'harmonisation duale d'un système d'affichage tête haute porté pour rendre conforme l'affichage d'informations de pilotage d'un aéronef avec le monde réel extérieur selon la revendication 2, dans lequel l'étape (208) de résolution du système d'équations comprend un premier ensemble de sous-étapes consistant à :

- dans une première sous-étape (214) d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$ , $I_3$ désignant la matrice identité ; puis
- répéter une deuxième sous-étape itérative (226) faisant passer de l'itération [s] à [s + 1] en calculant $\vec{y}_{[s+1]}$ puis $\hat{D}_{[s+1]}$ à l'aide des équations suivantes :

$$\vec{y}_{[s+1]} = \frac{\sum_{i\geq1}\left(\widehat{G} \cdot \widehat{K}_i \cdot \widehat{D}_{[s]} \cdot \vec{x}_i\right)}{\left\|\sum_{i\geq1}\left(\widehat{G} \cdot \widehat{K}_i \cdot \widehat{D}_{[s]} \cdot \vec{x}_i\right)\right\|}$$

$$\widehat{D}_{[s+1]} = \pi\left(\sum_{i\geq1}\left(\widehat{K}_i{}^T \cdot \widehat{G}^T \cdot \vec{y}_{[s+1]} \cdot \vec{x}_i{}^T\right)\right)$$

la suite $\{\vec{y}_{[s]}\}$ désignant une deuxième suite de vecteurs de direction externe, et les suites $\{\vec{y}_{[s]}\}$ et $\{\hat{D}_{[s]}\}$ convergeant respectivement vers $\vec{y_0}$ et $\hat{D}$ ; puis
- arrêter dans une troisième sous-étape d'arrêt (218) le processus itératif effectué au travers de la deuxième sous-étape (216) lorsque les limites $\hat{D}$ et $\hat{G}$ sont approximées avec une précision suffisante définie par une ou deux valeurs seuil prédéterminées.

4. Procédé d'harmonisation duale d'un système d'affichage tête haute porté pour rendre conforme l'affichage d'informations de pilotage d'un aéronef avec le monde réel extérieur selon l'un quelconque des revendications 2 à 3, dans lequel
le nombre N de mesures est égale à trois, et
le motif visuel centré de visée est mis figé sur l'afficheur par le calculateur d'harmonisation à trois positions différentes P1, P2, P3 correspondant respectivement aux trois visées V1, V2, V3 :

une première position P1 dans la partie gauche de l'afficheur et verticalement au centre, et
une deuxième position P2 dans la partie droite de l'afficheur et verticalement au centre, et
une troisième position P3 horizontalement au centre et vers le haut.

5. Procédé d'harmonisation duale d'un système d'affichage tête haute porté pour rendre conforme l'affichage d'informations de pilotage d'un aéronef avec le monde réel extérieur selon la revendication 1, dans lequel
le nombre N de mesures est supérieur ou égal à quatre et la matrice gauche $\hat{G}$ d'orientation relative entre le repère D2 lié à la plateforme de l'aéronef et le repère liée à la centrale inertielle D3 est inconnue, et
ne cherchant pas à déterminer le vecteur $\vec{y_0}$, la résolution (308) du système d'équations : $\hat{G}.\hat{K}_i.\hat{D}.\vec{x}_i = \vec{y_0}$ i variant de 1 à N se ramène à la résolution du système d'équations : $\hat{K}_i.\hat{D}.\vec{x}_i = \vec{z_0}$ pour i variant de 1 à 4, en notant $\vec{z_0} = \hat{G}^T.\vec{y_0}$, laquelle résolution utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - A sur l'ensemble des matrice de rotation 3 x3, pour déterminer la matrice $\hat{D}$.

6. Procédé d'harmonisation duale d'un système d'affichage tête haute porté pour rendre conforme l'affichage d'informations de pilotage d'un aéronef avec le monde réel extérieur selon la revendication 5, dans lequel l'étape (308) de résolution du système d'équations comprend un deuxième ensemble (312) de sous-étapes consistant à :

- dans une quatrième sous-étape (314) d'initialisation, initialiser une première suite de matrices droites $\{\hat{D}_{[s]}\}$, [s] désignant le rang entier de parcours de la suite $\{\hat{D}_{[s]}\}$, en mettant $\{\hat{D}_{[0]}\}$ égal à $I_3$ , $I_3$ désignant la matrice

identité ; puis

- répéter une cinquième sous-étape itérative (316) faisant passer de l'itération [$s$] à [$s + 1$] en calculant la valeur $\vec{z}_{[s+1]}$, puis la valeur $\widehat{D}_{[s+1]}$ de la première suite matricielle à l'aide des équations suivantes :

$$\vec{z}_{[s+1]} = \frac{\sum_{i \geq 1}\left(\widehat{K}_i \cdot \widehat{D}_{[s]} \cdot \vec{x}_i\right)}{\left\|\sum_{i \geq 1}\left(\widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^{\ T} \cdot \vec{z}_{[s+1]} \cdot \vec{x}_i^{\ T}\right)\right)$$

la suite $\{\vec{z}_{[s]}\}$ désignant une deuxième suite auxiliaire de vecteurs et la suite $\{\widehat{D}_{[s]}\}$ convergeant $\widehat{D}$ ; puis

- arrêter dans une sixième sous-étape d'arrêt (318) le processus itératif effectué au travers de la cinquième sous-étape (316) lorsque la limite $\widehat{D}$ est approximée avec une précision suffisante définie par une valeur de seuil prédéterminée.

**7.** Procédé d'harmonisation duale d'un système d'affichage tête haute porté pour rendre conforme l'affichage d'informations de pilotage d'un aéronef avec le monde réel extérieur selon l'une quelconque des revendications 5 à 6, dans lequel

le nombre N de mesures est égale à quatre, et

le motif visuel centré de visée est mis figé sur l'afficheur par le calculateur d'harmonisation à quatre positions différentes P1, P2, P3, P4 correspondant respectivement aux quatre visées V1, V2, V3, V4 :

- une première position P1 dans la partie gauche de l'afficheur et verticalement au centre, et
- une deuxième position P2 dans la partie droite de l'afficheur et verticalement au centre, et
- une troisième position P3 horizontalement au centre et vers le haut,
- une quatrième position P4 horizontalement au centre et vers le bas.

**8.** Procédé d'harmonisation duale d'un système d'affichage tête haute pour rendre conforme l'affichage d'informations de pilotage d'un aéronef avec le monde réel extérieur selon l'une quelconque des revendications 1 à 7, dans lequel la connaissance de la matrice M01 déterminée est exploitée pour recaler la symbologie en corrigeant l'erreur d'alignement entre l'afficheur et l'élément de poursuite du sous-système de détection de posture DDP.

**9.** Procédé d'harmonisation duale d'un système d'affichage tête haute pour rendre conforme l'affichage d'informations de pilotage d'un aéronef avec le monde réel extérieur selon l'une quelconque des revendications 1 à 8, dans lequel le motif visuel pourvu d'un point central est un réticule de la symbologie.

**10.** Système d'affichage tête haute porté pour rendre conforme l'affichage d'informations de pilotage d'un aéronef sur un afficheur avec le monde réel extérieur comprenant ;

- un afficheur (12) D0 tête haute porté transparent,
- un sous-système de détection de posture de tête DDP (16) ayant un premier élément mobile de poursuite (18) D1 attaché solidairement à l'afficheur transparent D0, un deuxième élément fixe (22) D2 lié solidairement à la plateforme de l'aéronef, et un moyen (26) de mesure et de détermination de l'orientation relative M12 du premier élément mobile de poursuite (18) D1 par rapport à un repère de référence du deuxième élément fixe (22) D2 lié à la plateforme,
- un dispositif inertiel d'attitude (30) D3 de fourniture de l'attitude relative M3t de la plateforme par rapport à un repère terrestre lié à la Terre, fixé solidairement à la plateforme,
- un sous-système d'harmonisation (34) du système d'affichage tête haute porté pour rendre conforme l'affichage d'informations de pilotage sur l'afficheur D0 avec le monde réel extérieur, le sous-système d'harmonisation (34) ayant un calculateur d'harmonisation duale (36) et un Interface Homme Système (38) pour gérer et réaliser la mise en œuvre du procédé d'harmonisation duale,

le système d'affichage tête haute porté étant **caractérisé en ce que** le sous-système d'harmonisation (34) est configuré pour :
- effectuer (206 ; 306) une série d'un nombre entier N supérieur ou égal à 3 de visées Vi différentes, i variant de 1 à N, effectuées au travers de l'afficheur D0 en alignant un motif visuel centré de visée sur une même cible fixe quelconque du monde réel extérieur, chaque visée Vi correspondant à une position figée différente Pi du centre du motif de visée sur l'afficheur D0 et ayant un vecteur de visée $\vec{xi}$ déterminé en fonction de la position Pi, et pour chaque visée Vi acquérir (206 ; 306) la mesure correspondante $\widehat{Ki}$ de l'orientation angulaire relative de l'élément de poursuite par rapport à une direction de référence DDP, fixe par rapport à la plateforme de l'aéronef, puis
- calculer (208 ; 308) la matrice d'orientation relative M01 entre l'afficheur D0 dans la position basculée et le premier élément de poursuite D1 comme la matrice droite $\hat{D}$ solution du système d'équations :

$$\hat{G}.\widehat{K}_i\hat{D}.\vec{x}_i = \vec{y}_0 \quad \text{pour i = 1 à N,}$$

le vecteur $\vec{y}_0$ désignant le vecteur dans le repère inertiel de la plateforme correspondant au point cible visé dans le monde réel extérieur et étant inconnu ; et
la matrice gauche $\hat{G}$ étant la matrice M23 d'orientation relative entre le repère du deuxième élément fixe D2, lié à la plateforme de l'aéronef et le repère du dispositif inertiel d'attitude D3, qui est potentiellement incorrecte mais supposée constante en fonction du temps, et qui lorsqu'elle est inconnue requiert au moins quatre mesures $\widehat{K}_i$.

**11.** Système d'affichage tête haute porté pour rendre conforme l'affichage d'informations de pilotage d'un aéronef sur un afficheur avec le monde réel extérieur selon la revendication 10, dans lequel :

le nombre N de mesures est supérieur ou égal à trois et la matrice gauche $\hat{G}$ d'orientation relative entre le repère lié D2 à la plateforme de l'aéronef et le repère liée à la centrale inertielle D3 est connue, et
la résolution du système d'équations $\hat{G}.\hat{K}_i\hat{D}.\vec{x}_i = \vec{y}_0$, i variant de 1 à N utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - $A$ sur l'ensemble des matrice de rotation 3 x3, pour déterminer la matrice $\hat{D}$ et le vecteur $\vec{y}_0$.

**12.** Système d'affichage tête haute porté pour rendre conforme l'affichage d'informations de pilotage d'un aéronef sur un afficheur avec le monde réel extérieur selon la revendication 11, dans lequel :
l'étape (208) de résolution du système d'équations comprend un premier ensemble de sous-étapes consistant à :

- dans une première sous-étape (214) d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$ , $I_3$ désignant la matrice identité ; puis
- répéter une deuxième sous-étape itérative (216) faisant passer de l'itération [s] à [s + 1] en calculant $\vec{y}_{[s+1]}$ puis $\{\hat{D}_{[s+1]}\}$ à l'aide des équations suivantes :

$$\vec{y}_{[s+1]} = \frac{\sum_{i\geq 1}\left(\widehat{G}\cdot\widehat{K}_i\cdot\widehat{D}_{[s]}\cdot\vec{x}_i\right)}{\left\|\sum_{i\geq 1}\left(\widehat{G}\cdot\widehat{K}_i\cdot\widehat{D}_{[s]}\cdot\vec{x}_i\right)\right\|}$$

$$\widehat{D}_{[s+1]} = \pi\left(\sum_{i\geq 1}\left(\widehat{K}_i{}^T\cdot\widehat{G}^T\cdot\vec{y}_{[s+1]}\cdot\vec{x}_i{}^T\right)\right)$$

la suite $\{\vec{y}_{[s]}\}$ désignant une deuxième suite de vecteurs de direction externe, les suites $\{\vec{y}_{[s]}\}$ et $\{\hat{D}_{[s]}\}$ convergeant respectivement vers $\vec{y}_0$ et $\hat{D}$ ; puis
- arrêter dans une troisième sous-étape d'arrêt (218) le processus itératif effectué au travers de la deuxième sous-étape (216) lorsque les limites $\hat{D}$ et $\hat{G}$ sont approximées avec une précision suffisante définie par une ou deux valeurs seuil prédéterminées.

**13.** Système d'affichage tête haute porté pour rendre conforme l'affichage d'informations de pilotage d'un aéronef sur un afficheur avec le monde réel extérieur selon la revendication 10, dans lequel :

- le nombre N de mesures est supérieur ou égal à quatre et la matrice gauche $\hat{G}$ d'orientation relative entre le repère lié D2 à la plateforme de l'aéronef et le repère liée à la centrale inertielle D3 est inconnue, et
- ne cherchant pas à déterminer le vecteur $\vec{y_0}$, la résolution du système d'équations : $\hat{G}.\hat{K_i}\hat{D}.\vec{x_i} = \vec{y_0}$, i variant de 1 à N se ramène à la résolution du système d'équations : $\hat{K_i}\cdot\hat{D}\cdot\vec{x_i} = \vec{z_0}$ pour i variant de 1 à 4, en notant $\vec{z_0} = \hat{G}^T\cdot\vec{y_0}$, laquelle résolution utilise un processus itératif et un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la matrice $\hat{D}$.

**14.** Système d'affichage tête haute porté pour rendre conforme l'affichage d'informations de pilotage d'un aéronef sur un afficheur avec le monde réel extérieur selon la revendication 13, dans lequel :
l'étape (308) de résolution du système d'équations comprend un deuxième ensemble (312) de sous-étapes consistant à :

- dans une quatrième sous-étape (314) d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$ , $I_3$ désignant la matrice identité ; puis
- répéter une cinquième sous-étape itérative (316) faisant passer de l'itération [s] à [s + 1] en calculant la valeur $\vec{z}_{[s+1]}$, puis la valeur $\hat{D}_{[s+1]}$ de la première suite matricielle à l'aide des équations suivantes :

$$\vec{z}_{[s+1]} = \frac{\sum_{i\geq1}(\hat{K}_i \cdot \hat{D}_{[s]} \cdot \vec{x}_i)}{\left\|\sum_{i\geq1}(\hat{K}_i \cdot \hat{D}_{[s]} \cdot \vec{x}_i)\right\|}$$

$$\hat{D}_{[s+1]} = \pi\left(\sum_{i\geq1}\left(\hat{K}_i^T \cdot \vec{z}_{[s+1]} \cdot \vec{x}_i^T\right)\right)$$

la suite $\{\vec{z}_{[s]}\}$ désignant une deuxième suite auxiliaire de vecteurs et la suite $\{\hat{D}_{[s]}\}$ convergeant D ; puis
- arrêter dans une sixième sous-étape d'arrêt (318) le processus itératif effectué au travers de la cinquième sous-étape (316) lorsque la limite D est approximée avec une précision suffisante définie par une valeur de seuil prédéterminée.


**Patentansprüche**

**1.** Verfahren zur dualen Harmonisierung eines getragenen Head-up-Anzeigesystems zum Anpassen der Anzeige von Steuerinformationen eines Flugzeugs an die reale Außenwelt,
wobei das getragene Head-up-Anzeigesystem Folgendes umfasst:

- ein getragenes transparentes Head-up-Display (12) D0;
- ein Subsystem (16) zum Erkennen einer Kopfhaltung DDP mit einem ersten beweglichen Verfolgungselement (18) D1, das fest an dem transparenten Display (12) D0 angebracht ist, einem unbeweglichen zweiten Element (22) D2, das fest mit der Plattform (24) des Flugzeugs verbunden ist, und einem Mittel (26) zum Messen und Bestimmen der relativen Orientierung M12 des ersten beweglichen Verfolgungselements (18) D1 relativ zu einer Referenzmarke des unbeweglichen zweiten Elements (22) D2, das mit der Plattform (24) verbunden ist,
- ein Lageträgheitsgerät (30) D3 zum Angeben der relativen Lage M3t der Plattform (24) relativ zu einer terrestrischen Bezugsmarke, der mit der Erde verbunden ist,
- ein Subsystem (34) zum Harmonisieren des getragenen Head-up-Anzeigesystems zum Anpassen der Anzeige von Steuerinformationen auf dem Display D0 an die reale Außenwelt, wobei das Harmonisierungssubsystem (34) einen dualen Harmonisierungsrechner und eine Mensch-System-Schnittstelle zum Verwalten und Realisieren der Durchführung des dualen Harmonisierungsverfahrens hat,

wobei das duale Harmonisierungsverfahren **dadurch gekennzeichnet ist, dass** es die folgenden Schritte beinhaltet:

- Durchführen (206; 306) einer Serie aus einer ganzen Zahl N gleich oder größer als 3 mit unterschiedlichen Sichtlinien Vi, wobei i von 1 bis N variiert, durchgeführt durch das Display D0 durch Ausrichten eines zentrierten visuellen Sichtlinienmotivs auf einem beliebigen selben unbeweglichen Ziel der realen Außenwelt, wobei jede Sichtlinie Vi einer anderen fixierten Position Pi des Mittelpunkts des Sichtlinienmotivs auf dem Display D0 entspricht und einen Sichtlinienvektor $\vec{xi}$ hat, der in Abhängigkeit von der Position Pi bestimmt wird, und Erfassen (206; 306), für jede Sichtlinie Vi, des entsprechenden Messwertes $\hat{K}_i$ der relativen Winkelorientierung des Verfolgungselements relativ zu einer Referenzrichtung DDP, die mit Bezug auf die Plattform des Flugzeugs unbeweglich ist, dann
- Berechnen (206; 306) der relativen Orientierungmatrix M01 zwischen dem Display D0 in der gekippten Position und dem ersten Verfolgungselement D1 als Rechtsmatrixlösung $\hat{D}$ des Gleichungssystems:

$$\hat{G}.\hat{K}_i\hat{D}.\vec{x}_i = \vec{y}_0, \text{ für i} = 1 \text{ bis N},$$

wobei der Vektor $\vec{y}_0$, der den Vektor in der Trägheitsreferenz der Plattform entsprechend dem anvisierten Zielpunkt in der realen Außenwelt designiert und unbekannt ist; und
wobei die Linksmatrix $\hat{G}$ die relative Orientierungsmatrix M23 zwischen der Referenz des mit der Plattform des Flugzeugs verbundenen unbeweglichen zweiten Elements D2 und der Referenz der Lageträgheitsvorrichtung D3 ist, die potenziell inkorrekt ist, aber als konstant in Abhängigkeit von der Zeit angenommen wird, und die, wenn sie unbekannt ist, mindestens vier Messungen $\hat{K}_i$ erfordert.

2. Verfahren zur dualen Harmonisierung eines getragenen Head-up-Anzeigesystems zum Anpassen der Anzeige von Steuerinformationen eines Flugzeugs an die reale Außenwelt nach Anspruch 1, wobei die Anzahl N von Messungen gleich oder größer als drei ist und die relative Linksorientierungsmatrix $\hat{G}$ zwischen der Referenz des unbeweglichen zweiten Elements D2, mit der Plattform des Flugzeugs verbunden, und der Referenz der Lageträgheitsvorrichtung D3 bekannt ist, und die Auflösung des Gleichungssystems $\hat{G}.\hat{K}_i\hat{D}.\vec{x}_i = \vec{y}_0$ wobei i von 1 bis N variiert, einen iterativen Prozess und einen Rückgewinnungsoperator $\pi(.)$ nutzt, der eine beliebige Matrix A in eine quadratische 3x3 Rotationsmatrix $\pi(A)$ umwandelt, die dem Sinn der kleinsten Quadrate auf allen Termen der Matrix $\pi(A)-A$ auf dem Satz von 3x3 Rotationsmatrizen am nächsten liegt, um die Matrix $\hat{D}$ und den Vektor $\vec{y}_0$ zu bestimmen.

3. Verfahren zur dualen Harmonisierung eines getragenen Head-up-Anzeigesystems zum Anpassen der Anzeige von Steuerinformationen eines Flugzeugs an die reale Außenwelt nach Anspruch 2, wobei der Schritt (208) des Auflösens des Gleichungssystems einen ersten Satz von Teilschritten umfasst, bestehend aus:

- Initialisieren, in einem ersten Initialisierungsteilschritt (214), einer ersten Folge von Rechtsmatrizen $\{\hat{D}_{[s]}\}$, wobei [s] die ganzzahlige Reihe des Verlaufs der Folge $\{\hat{D}_{[s]}\}$ designiert, wobei $\hat{D}_{[0]}$ gleich $I_3$ gemacht wird, wobei $I_3$ die Identitätsmatrix designiert; dann
- Wiederholen eines zweiten iterativen Teilschrittes (226), der bewirkt, dass die Iteration [s] zu [s+1] übergeht, durch Berechnen von $\vec{y}_{[s+1]}$, dann $\{\hat{D}_{[s+1]}\}$, mithilfe der folgenden Gleichungen:

$$\vec{y}_{[s+1]} = \frac{\sum_{i\geq 1}(\hat{G}\cdot\hat{K}_i\cdot\hat{D}_{[s]}\cdot\vec{x}_i)}{\left\|\sum_{i\geq 1}(\hat{G}\cdot\hat{K}_i\cdot\hat{D}_{[s]}\cdot\vec{x}_i)\right\|}$$

$$\hat{D}_{[s+1]} = \pi\left(\sum_{i\geq 1}\left(\hat{K}_i^{\mathrm{T}}\cdot\hat{G}^{\mathrm{T}}\cdot\vec{y}_{[s+1]}\cdot\vec{x}_i^{\mathrm{T}}\right)\right)$$

wobei die Folge $\{\vec{y}_{[s]}\}$ eine zweite Folge von externen Richtungsvektoren designiert, und die Folgen $\{\vec{y}_{[s]}\}$ und $\{\hat{D}_{[s]}\}$ jeweils zu $\vec{y}_0$ und $\hat{D}$ konvergieren; dann

- Stoppen, in einem dritten Stoppteilschritt (218), des durch den zweiten Teilschritt (216) durchgeführten iterativen Prozesses, wenn die Grenzen $\hat{D}$ und $\hat{G}$ mit durch einen oder zwei vorbestimmte Schwellenwerte mit einer definierten ausreichenden Präzision approximiert werden.

4. Verfahren zur dualen Harmonisierung eines getragenen Head-up-Anzeigesystems zum Anpassen der Anzeige von Steuerinformationen eines Flugzeugs an die reale Außenwelt nach einem der Ansprüche 2 bis 3, wobei die Anzahl N von Messungen gleich drei ist, und das visuelle zentrierte Sichtlinienmotiv auf dem Display durch den Harmonisierungsrechner in drei unterschiedlichen Positionen P1, P2, P3 jeweils entsprechend den drei Sichtlinien V1, V2, V3 fixiert wird:

einer ersten Position P1 im linken Teil des Displays und vertikal zum Mittelpunkt, und
einer zweiten Position P2 im rechten Teil des Displays und vertikal zum Mittelpunkt, und
einer dritten Position P3 horizontal zum Mittelpunkt und nach oben.

5. Verfahren zur dualen Harmonisierung eines getragenen Head-up-Anzeigesystems zum Anpassen der Anzeige von Steuerinformationen eines Flugzeugs an die reale Außenwelt nach Anspruch 1, wobei die Anzahl N von Messungen gleich oder größer als vier ist und die relative Linksorientierungsmatrix $\hat{G}$ zwischen der mit der Plattform des Flugzeugs verbundenen Referenz D2 und der mit dem Trägheitsmittelpunkt D3 verbundenen Referenz unbekannt ist, und ohne zu versuchen, den Vektor $\vec{y}_0$ zu bestimmen, das Auflösen (308) des Gleichungssystems: $\hat{G}.\hat{K}_i\hat{D}.\vec{x}_i = \vec{y}_0$, wobei i von 1 bis N variiert, zur Auflösung des folgenden Gleichungssystems führt: $\hat{K}_i.\hat{D}.\vec{x}_i = \vec{z}_0$, wobei i von 1 bis 4 variiert, unter Notierung von $\vec{z}_0 = \hat{G}^T \cdot \vec{y}_0$, wobei diese Auflösung einen iterativen Prozess und einen Rückgewinnungsoperator $\pi(.)$ nutzt, der eine beliebige Matrix A in eine quadratische 3x3 Rotationsmatrix $\pi(A)$ umwandelt, die dem Sinn der kleinsten Quadrate auf allen Termen der Matrix $\pi(A)$-A auf dem Satz von 3x3 Rotationsmatrizen am nächsten liegt, um die Matrix $\hat{D}$ zu bestimmen.

6. Verfahren zur dualen Harmonisierung eines getragenen Head-up-Anzeigesystems zum Anpassen der Anzeige von Steuerinformationen eines Flugzeugs an die reale Außenwelt nach Anspruch 5, wobei der Schritt (308) des Auflösens des Gleichungssystems einen zweiten Satz (312) von Teilschritten beinhaltet, bestehend aus:

- Initialisieren, in einem vierten Initialisierungsteilschritt (314), einer ersten Folge von Rechtsmatrizen $\{\hat{D}_{[s]}\}$ wobei [s] die ganzzahlige Reihe des Verlaufs der Folge $\{\hat{D}_{[s]}\}$ designiert, wobei $\hat{D}_{[0]}$ gleich $I_3$ gemacht wird, wobei $I_3$ die Identitätsmatrix designiert; dann
- Wiederholen eines fünften iterativen Teilschrittes (316), der bewirkt, dass die Iteration [s] zu [s+1] übergeht, durch Berechnen des Wertes $\vec{z}_{[s+1]}$, dann des Wertes $\hat{D}_{[s+1]}$ der ersten Matrixfolge mithilfe der folgenden Glei-chungen:

$$\vec{z}_{[s+1]} = \frac{\sum_{i \geq 1}\left(\hat{K}_i \cdot \hat{D}_{[s]} \cdot \vec{x}_i\right)}{\left\|\sum_{i \geq 1}\left(\hat{K}_i \cdot \hat{D}_{[s]} \cdot \vec{x}_i\right)\right\|}$$

$$\hat{D}_{[s+1]} = \pi\left(\sum_{i \geq 1}\left(\hat{K}_i^{\ T} \cdot \vec{z}_{[s+1]} \cdot \vec{x}_i^{\ T}\right)\right)$$

wobei die Folge $\{\vec{z}_{[s]}\}$ eine zweite Hilfsfolge von Vektoren designiert und die Folge $\{\hat{D}_{[s]}\}$ zu $\hat{D}$ konvergiert; dann
- Stoppen, in einem sechsten Stoppteilschritt (318), des iterativen Prozesses, durchgeführt durch den fünften Teilschritt (316), wenn die Grenze D mit einer durch einen bestimmten Schwellenwert definierten ausreichenden Präzision approximiert wird.

7. Verfahren zur dualen Harmonisierung eines getragenen Head-up-Anzeigesystems zum Anpassen der Anzeige von Steuerinformationen eines Flugzeugs an die reale Außenwelt nach einem der Ansprüche 5 bis 6, wobei die Anzahl N von Messungen gleich vier ist, und
das visuelle zentrierte Sichtlinienmotiv auf dem Display durch den Harmonisierungsrechner in vier unterschiedlichen Positionen P1, P2, P3, P4 jeweils entsprechend den vier Sichtlinien V1, V2, V3, V4 fixiert wird:

einer ersten Position P1 im linken Teil des Displays und vertikal zum Mittelpunkt, und
einer zweiten Position P2 im rechten Teil des Displays und vertikal zum Mittelpunkt, und
einer dritten Position P3 horizontal zum Mittelpunkt und nach oben,
einer vierten Position P4 horizontal zum Mittelpunkt und nach unten.

8. Verfahren zur dualen Harmonisierung eines Head-up-Anzeigesystems zum Anpassen der Anzeige von Steuerinformationen eines Flugzeugs an die reale Außenwelt nach einem der Ansprüche 1 bis 7, wobei die Kenntnis der bestimmten Matrix M01 zum Neueinstellen der Symbologie durch Korrigieren des Ausrichtungsfehlers zwischen dem Display und dem Verfolgungselement des Lageerkennungssubsystems DDP genutzt wird.

9. Verfahren zur dualen Harmonisierung eines Head-up-Anzeigesystems zum Anpassen der Anzeige von Steuerinformationen eines Flugzeugs an die reale Außenwelt nach einem der Ansprüche 1 bis 8, wobei das visuelle Motiv mit einem zentralen Punkt ein Fadenkreuz der Symbologie ist.

10. Getragenes Head-up-Anzeigesystem zum Anpassen der Anzeige von Steuerinformationen eines Flugzeugs auf einem Display an die reale Außenwelt, das Folgendes umfasst:

- ein transparentes getragenes Head-up-Display (12) D0,
- ein Kopfhaltungserkennungssubsystem DDP (16) mit einem ersten beweglichen Verfolgungselement (18) D1, das fest an dem transparenten Display D0 angebracht ist, einem unbeweglichen zweiten Element (22) D2, das fest an der Plattform des Flugzeugs verbunden ist, und ein Mittel (26) zum Messen und Bestimmen der relativen Orientierung M12 des ersten beweglichen Verfolgungselements (18) D1 relativ zu einer Referenzmarke des unbeweglichen zweiten Elements (22) D2, das mit der Plattform verbunden ist,
- ein Lageträgheitsgerät (30) D3 zum Angeben einer relativen Lage M3t der Plattform relativ zu einer terrestrischen Referenz, die mit der Erde verbunden ist, fest mit der Plattform befestigt,
- ein Subsystem (34) zum Harmonisieren des getragenen Head-up-Anzeigesystems zum Anpassen der Anzeige von Steuerinformationen auf dem Display D0 an die reale Außenwelt, wobei das Harmonisierungssubsystem (34) einen dualen Harmonisierungsrechner (36) und eine Mensch-System-Schnittstelle (38) zum Verwalten und Durchführung des dualen Harmonisierungsverfahrens hat,

wobei das getragene Head-up-Anzeigesystem **dadurch gekennzeichnet ist, dass** das Harmonisierungssubsystem (34) konfiguriert ist zum:

- Durchführen (206; 306) einer Serie aus einer ganzen Zahl N gleich oder größer als 3 mit unterschiedlichen Sichtlinien Vi, wobei i von 1 bis N variiert, durchgeführt über das Display D0 durch Ausrichten eines zentrierten visuellen Sichtlinienmotivs auf einem beliebigen selben unbeweglichen Ziel der realen Außenwelt, wobei jede Sichtlinie Vi einer anderen fixierten Position Pi des Mittelpunkts des Sichtlinienmotivs auf dem Display D0 entspricht und einen Sichtlinienvektor $\vec{xi}$ hat, bestimmt in Abhängigkeit von der Position Pi, und Erfassen (206; 306), für jede Sichtlinie Vi, des entsprechenden Messwertes $\hat{K}_i$ der relativen Winkelorientierung des Verfolgungselements relativ zu einer Referenzrichtung DDP, die mit Bezug auf die Plattform des Flugzeugs unbeweglich ist, dann
- Berechnen (208; 308) der relativen Orientierungmatrix M01 zwischen dem Display D0 in der gekippten Position und dem ersten Verfolgungselement D1 als Rechtsmatrixlösung $\hat{D}$ des Gleichungssystems:

$$\hat{G}.\hat{K}_i\hat{D}.\vec{x}_i = \vec{y}_0, \text{ für i} = 1 \text{ bis N,}$$

wobei der Vektor $\vec{y_0}$, der den Vektor in der Trägheitsreferenz der Plattform entsprechend dem anvisierten Zielpunkt in der realen Außenwelt designiert und unbekannt ist; und
wobei die Linksmatrix $\hat{G}$ die relative Orientierungsmatrix M23 zwischen der Referenz des mit der Plattform des Flugzeugs verbundenen unbeweglichen zweiten Elements D2 und der Referenz der Lageträgheitsvorrichtung D3 ist, die potenziell inkorrekt ist, aber als konstant in Abhängigkeit von der Zeit angenommen wird, und die, wenn sie unbekannt ist, mindestens vier Messungen $\hat{K}_i$ erfordert.

11. Getragenes Head-up-Anzeigesystem zum Anpassen der Anzeige von Steuerinformationen eines Flugzeugs auf einem Display an die reale Außenwelt nach Anspruch 10, wobei:

die Anzahl N von Messungen gleich oder größer als drei ist und die relative Orientierungslinksmatrix $\hat{G}$ zwischen der mit der Plattform des Flugzeugs verbundenen Referenz D2 und der Referenz der Lageträgheitsvorrichtung D3 bekannt ist, und
die Auflösung des Gleichungssystems $\hat{G}.\hat{K_i}\hat{D}.\vec{x}_i = \vec{y}_0$, wobei i von 1 bis N variiert, einen iterativen Prozess und einen Rückgewinnungsoperator $\pi(.)$ nutzt, der eine beliebige Matrix A in eine quadratische 3x3 Rotationsmatrix $\pi(A)$ umwandelt, die dem Sinn der kleinsten Quadrate auf allen Termen der Matrix $\pi(A)$-A auf dem Satz von 3x3 Rotationsmatrizen am nächsten liegt, um die Matrix $\hat{D}$ und den Vektor $\vec{y}_0$ zu bestimmen.

12. Getragenes Head-up-Anzeigesystem zum Anpassen der Anzeige von Steuerinformationen eines Flugzeugs auf einem Display an die reale Außenwelt nach Anspruch 11, wobei:
der Schritt (208) des Auflösens des Gleichungssystems einen ersten Satz von Teilschritten umfasst, bestehend aus:

- Initialisieren, in einem ersten Initialisierungsteilschritt (214), einer ersten Folge von Rechtsmatrizen $\{\hat{D}_{[s]}\}$, wobei [s] die ganzzahlige Reihe des Verlaufs der Folge $\{\hat{D}_{[s]}\}$ designiert, wobei $\hat{D}_{[0]}$ gleich $I_3$ gemacht wird, wobei $I_3$ die Identitätsmatrix designiert; dann
- Wiederholen eines zweiten iterativen Teilschrittes (216), der bewirkt, dass die Iteration [s] zu [s+1] übergeht, durch Berechnen von $\vec{y}_{[s+1]}$, dann $\hat{D}_{[s+1]}$, mithilfe der folgenden Gleichungen:

$$\vec{y}_{[s+1]} = \frac{\sum_{i\geq1}\left(\hat{G}\cdot\hat{K}_i\cdot\hat{D}_{[s]}\cdot\vec{x}_i\right)}{\left\|\sum_{i\geq1}\left(\hat{G}\cdot\hat{K}_i\cdot\hat{D}_{[s]}\cdot\vec{x}_i\right)\right\|}$$

$$\hat{D}_{[s+1]} = \pi\left(\sum_{i\geq1}\left(\hat{K}_i^T\cdot\hat{G}^T\cdot\vec{y}_{[s+1]}\cdot\vec{x}_i^T\right)\right)$$

wobei die Folge $\{\vec{y}_{[s]}\}$ eine zweite Folge von externen Richtungsvektoren designiert, und die Folgen $\{\vec{y}_{[s]}\}$ und $\{\hat{D}_{[s]}\}$ jeweils zu $\vec{y}_0$ und $\hat{D}$ konvergieren; dann
- Stoppen, in einem dritten Stoppteilschritt (218), des durch den zweiten Teilschritt (216) durchgeführten iterativen Prozesses, wenn die Grenzen $\hat{D}$ und $\hat{G}$ mit einer durch einen oder zwei vorbestimmte Schwellenwerte definierten ausreichenden Präzision approximiert werden.

13. Getragenes Head-up-Anzeigesystem zum Anpassen der Anzeige von Steuerinformationen eines Flugzeugs auf einem Display an die reale Außenwelt nach Anspruch 10, wobei:

die Anzahl N von Messungen gleich oder größer als vier ist und die relative Linksorientierungsmatrix $\hat{G}$ zwischen der mit der Plattform des Flugzeugs verbundenen Referenz D2 und der mit dem Trägheitsmittelpunkt D3 verbundenen Referenz unbekannt ist, und
ohne zu versuchen, den Vektor $\vec{y}_0$ zu bestimmen, das Auflösen (308) des Gleichungssystems: $\hat{G}.\hat{K_i}\hat{D}.\vec{x}_i = \vec{y}_0$, wobei i von 1 bis N variiert, zur Auflösung des folgenden Gleichungssystems entspricht: $\hat{K_i}\hat{D}\cdot\vec{x}_i = \vec{z}_0$, wobei i von 1 bis 4 variiert, unter Notierung von $\vec{z}_0 = \hat{G}^T\cdot\vec{y}_0$, wobei diese Auflösung einen iterativen Prozess und einen Rückgewinnungsoperator $\pi(.)$ nutzt, der eine beliebige Matrix A in eine quadratische 3x3 Rotationsmatrix $\pi(A)$ umwandelt, die dem Sinn der kleinsten Quadrate auf allen Termen der Matrix $\pi(A)$- A auf dem Satz von 3x3 Rotationsmatrizen am nächsten liegt, um die Matrix D zu bestimmen.

14. Getragenes Head-up-Anzeigesystem zum Anpassen der Anzeige von Steuerinformationen eines Flugzeugs auf einem Display an die reale Außenwelt nach Anspruch 13, wobei:
der Schritt (308) des Auflösens des Gleichungssystems einen zweiten Satz (312) von Teilschritten beinhaltet, bestehend aus:

- Initialisieren, in einem vierten Initialisierungsteilschritt (314), einer ersten Folge von Rechtsmatrizen $\{\hat{D}_{[s]}\}$, wobei [s] die ganzzahlige Reihe des Verlaufs der Folge $\{\hat{D}_{[s]}\}$ designiert, wobei $\hat{D}_{[0]}$ gleich $I_3$ gemacht wird, wobei $I_3$ die Identitätsmatrix designiert; dann
- Wiederholen eines fünften iterativen Teilschrittes (316), der bewirkt, dass die Iteration [s] zu [s+1] übergeht, durch Berechnen des Wertes $\vec{z}_{[s+1]}$, dann des Wertes $\hat{D}_{[s+1]}$ der ersten Matrixfolge mithilfe der folgenden Gleichungen:

$$\vec{z}_{[s+1]} = \frac{\sum_{i\geq 1}\left(\hat{K}_i \cdot \hat{D}_{[s]} \cdot \vec{x}_i\right)}{\left\|\sum_{i\geq 1}\left(\hat{K}_i \cdot \hat{D}_{[s]} \cdot \vec{x}_i\right)\right\|}$$

$$\hat{D}_{[s+1]} = \pi\left(\sum_{i\geq 1}\left(\hat{K}_i^T \cdot \vec{z}_{[s+1]} \cdot \vec{x}_i^T\right)\right)$$

wobei die Folge $\{\vec{z}_{[s]}\}$ eine zweite Hilfsfolge von Vektoren designiert und die Folge $\{\hat{D}_{[s]}\}$ zu $\hat{D}$ konvergiert; dann
- Stoppen, in einem sechsten Stoppteilschritt (318), des iterativen Prozesses, durchgeführt durch den fünften Teilschritt (316), wenn die Grenze $\hat{D}$ mit einer durch einen bestimmten Schwellenwert definierten ausreichenden Präzision approximiert wird.

## Claims

1. Method for dual harmonisation of a portable head-up display system for bringing into conformity the display of control information of an aircraft with the outside real world,
   the portable head-up display system comprising:

   - a portable transparent head-up display (12) D0,
   - a sub-system for detecting head posture DDP (16) having a first movable tracking element D1 (18) which is fixedly attached to the transparent display unit (12) DO, a second fixed element D2 (22) which is fixedly connected to the platform (24) of the aircraft. and a means (26) for measuring and determining the relative orientation M12 of the first movable tracking element (18) D1 relative to a reference mark of the second fixed element (22) D2 connected to the platform (24),
   - an inertial attitude device (30) D3 for providing relative attitude M3t of the platform (24) relative to a ground reference system which is connected to the Earth,
   - a harmonisation sub-system (34) of the portable head-up display system to bring into conformity the display of control information on the display unit D0 with the outside real world, the harmonisation sub-system (34) having a dual harmonisation processor and a man/system interface to control and perform the implementation of the dual harmonisation method,

   the dual harmonisation method being **characterised in that** it comprises the steps of:

   - carrying out (206; 306) a sequence of a whole number N greater than or equal to 3 of different targets Vi, i varying from 1 to N carried out via the display unit D0 by aligning a centred visual target pattern on any same fixed target of the outside real world, each target Vi corresponding to a different fixed position Pi of the centre of the target pattern on the display D0 and having a target vector $\vec{xi}$ which is determined as a function of the position Pi, and, for each target Vi, acquiring (206; 306) the corresponding measurement $\hat{K}_i$ of the relative angular orientation of the tracking element relative to a reference direction DDP which is fixed relative to the platform of the aircraft, then
   - calculating (206; 306) the relative orientation matrix M01 between the display unit D0 in the tilted position and the first tracking element D1 as the right matrix D solution of the equation system:

$$\hat{G}.\hat{K}_i\hat{D}.\vec{x}_i = \vec{y}_0 \text{ for i} = 1 \text{ to N,}$$

the vector $\vec{y_0}$ designating the vector in the inertial reference system of the platform corresponding to the intended target point in the outside real world and being unknown; and

the left matrix G being the relative orientation matrix M23 between the reference system of the second fixed element D2, connected to the platform of the aircraft and the reference system of the inertial attitude device D3, which is potentially incorrect but assumed to be constant as a function of time, and which, when it is unknown, requires at least four measurements $\hat{K_i}$.

2. Dual harmonisation method for a portable head-up display system in order to bring into conformity the display of control information of an aircraft with the outside real world according to claim 1, wherein

the number N of measurements is greater than or equal to three and the left matrix $\hat{G}$ of relative orientation between the reference system of the second fixed element D2 connected to the platform of the aircraft and the reference system of the inertial attitude device D3 is known, and

the solution of the system of equations $\hat{G}.\hat{K_i}\hat{D}.\vec{x_i} = \vec{y_0}$, i varying from 1 to N, uses an iterative method and a recovery operator $\pi(.)$ which transforms any matrix A into a square 3x3 rotation matrix $\pi(A)$ which is closest to the sense of the least squares over all of the terms of the matrix $\pi(A)$-A over all the 3x3 rotation matrix in order to determine the matrix $\hat{D}$ and the vector $\vec{y_0}$.

3. Dual harmonisation method of a portable head-up display system in order to bring into conformity the display of control information of an aircraft with the outside real world according to claim 2, wherein the step (208) of solving the equation system comprises a first set of sub-steps involving:

- in a first initialisation sub-step (214), initialising a first sequence of right matrices $\{\hat{D}_{[s]}\}$, [s] designating the entire rank of the path of the sequence $\{\hat{D}_{[s]}\}$, placing $\hat{D}_{[0]}$ to be equal to $I_3$, $I_3$ designating the identity matrix; then
- repeating a second iterative sub-step (226) which moves from the iteration [s] to [s+1] by calculating $\vec{y}_{[s+1]}$ then $\hat{D}_{[s+1]}$ using the following equations:

$$\vec{y}_{[s+1]} = \frac{\sum_{i \geq 1}\left(\hat{G} \cdot \hat{K}_i \cdot \hat{D}_{[s]} \cdot \vec{x}_i\right)}{\left\|\sum_{i \geq 1}\left(\hat{G} \cdot \hat{K}_i \cdot \hat{D}_{[s]} \cdot \vec{x}_i\right)\right\|}$$

$$\hat{D}_{[s+1]} = \pi\left(\sum_{i \geq 1}\left(\hat{K}_i^T \cdot \hat{G}^T \cdot \vec{y}_{[s+1]} \cdot \vec{x}_i^T\right)\right)$$

the sequence $\{\vec{y}_{[s]}\}$ designating a second sequence of external direction vectors, and the sequences $\{\vec{y}_{[s]}\}$ and $\{\hat{D}_{[s]}\}$ converging towards $\vec{y_0}$ and $\hat{D}$, respectively, then
- stopping in a third stoppage sub-step (218) the iterative method which is carried out via the second sub-step (216) when the limits $\hat{D}$ and $\hat{G}$ are approximated with sufficient precision defined by one or two predetermined threshold values.

4. Dual harmonisation method of a portable head-up display system in order to bring into conformity the display of control information of an aircraft with the outside real world according to any of claims 2 to 3, wherein

the number N of measurements is equal to three, and

the centred visual target pattern is placed in a fixed manner on the display unit by the harmonisation processor at three different positions P1, P2, P3 corresponding to three targets V1, V2, V3, respectively:

a first position P1 in the left portion of the display unit and vertically at the centre, and
a second position P2 in the right portion of the display unit and vertically at the centre, and
a third position P3 horizontally at the centre and at the top.

5. Dual harmonisation method of a portable head-up display system in order to bring into conformity the display of control information of an aircraft with the outside real world according to claim 1, wherein

the number N of measurements is greater than or equal to four and the left matrix $\hat{G}$ of relative orientation between the reference system D2 connected to the platform of the aircraft and the reference system connected to the inertial unit D3 is unknown, and

not seeking to determine the vector $\vec{y_0}$, the solution (308) of the equation system: $\hat{G}.\hat{K_i}\hat{D}.\vec{x_i} = \vec{y_0}$, i varying from 1 to N, corresponds to the solution of the system of equations $\hat{K_i}\hat{D}.\vec{x_i} = \vec{z_0}$ for i varying from 1 to 4, $\vec{z_0} = \hat{G}^T \cdot \vec{y_0}$, which solution uses an iterative process and a recovery operator $\pi(.)$ which transforms any matrix A into a square 3x3 rotation matrix $\pi(A)$, closest to the sense of the least squares over all of the terms of the matrix $\pi(A)-A$ over all of the 3x3 rotation matrix, in order to determine the matrix $\hat{D}$.

6. Dual harmonisation method of a portable head-up display system in order to bring into conformity the display of control information of an aircraft with the outside real world according to claim 5, wherein
the step (308) for solving the equation system comprises a second set (312) of sub-steps involving:

- in a fourth initialisation sub-step (314), initialising a first sequence of right matrices $\{\hat{D}_{[s]}\}$, [s] designating the entire rank of the path of the sequence $\{\hat{D}_{[s]}\}$, placing $\hat{D}_{[0]}$ equal to $I_3$, $I_3$ designating the identity matrix; then
- repeating a fifth iterative sub-step (316) which moves from the iteration [s] to [s+1] by calculating the value $\vec{z}_{[s+1]}$, then the value $\hat{D}_{[s+1]}$ of the first matrix sequence using the following equations:

$$\vec{z}_{[s+1]} = \frac{\sum_{i\geq 1}\left(\widehat{K}_i \cdot \widehat{D}_{[s]} \cdot \vec{x}_i\right)}{\left\|\sum_{i\geq 1}\left(\widehat{K}_i \cdot \widehat{D}_{[s]} \cdot \vec{x}_i\right)\right\|}$$

$$\widehat{D}_{[s+1]} = \pi\left(\sum_{i\geq 1}\left(\widehat{K}_i^{\mathrm{T}} \cdot \vec{z}_{[s+1]} \cdot \vec{x}_i^{\mathrm{T}}\right)\right)$$

the sequence $\{\vec{z}_{[s]}\}$ designating a second auxiliary sequence of vectors and the sequence $\{\hat{D}_{[s]}\}$ converging towards $\hat{D}$; then

- stopping in a sixth stoppage sub-step (318) the iterative process carried out via the fifth sub-step (316) when the limit $\hat{D}$ is approximated with sufficient precision defined by a predetermined threshold value.

7. Dual harmonisation method of a portable head-up display system in order to bring into conformity the display of control information of an aircraft with the outside real world according to any one of claim 5 to 6, wherein
the number N of measurements is equal to four, and
the centred visual target pattern is placed fixed on the display unit by the harmonisation processor at four different positions P1, P2, P3, P4 which correspond to the four targets V1, V2, V3, V4, respectively:

- a first position P1 in the left portion of the display unit and vertically at the centre, and
- a second position P2 in the right portion of the display unit and vertically at the centre, and
- a third position P3 horizontally at the centre and at the top,
- a fourth position P4 horizontally at the centre and at the bottom.

8. Dual harmonisation method of a head-up display system in order to bring into conformity the display of control information of an aircraft with the outside real world according to any one of claims 1 to 7, wherein
the knowledge of the determined matrix M01 is used to recalibrate the symbology by correcting the alignment error between the display unit and the tracking element of the posture detection sub-system DDP.

9. Dual harmonisation method of a head-up display system in order to bring into conformity the display of control information of an aircraft with the outside real world according to any one of claims 1 to 8, wherein
the visual pattern provided with a central point is a reticle of the symbology.

10. Portable head-up display system in order to bring into conformity the display of control information of an aircraft on the display unit with the outside real world comprising:

- a portable transparent head-up display unit (12) D0,
- a head posture detection sub-system DDP (16) having a first movable tracking element (18) D1 which is fixedly attached to the transparent display unit D0, a second fixed element (22) D2 which is fixedly connected to the platform of the aircraft, and a means (26) for measuring and determining the relative orientation M12 of the first movable tracking element (18) D1 relative to a reference system of the second fixed element (22) D2 which is connected to the platform,

- an inertial attitude device (30) D3 for providing the relative attitude M3t of the platform relative to a ground reference system which is connected to the Earth and which is fixedly joined to the platform,
- a harmonisation sub-system (34) of the portable head-up display system in order to bring into conformity the display of control information on the display unit D0 with the outside real world, the harmonisation sub-system (34) having a dual harmonisation processor (36) and a man/system interface (38) in order to control and perform the implementation of the dual harmonisation method,

the portable head-up display system being **characterised in that** the harmonisation sub-system (34) is configured to:

- carry out (206; 306) a sequence of a whole number N greater than or equal to 3 of different targets Vi, i varying from 1 to N, carried out via the display unit D0 by aligning a centred visual target pattern on any same fixed target of the outside real world, each target Vi corresponding to a different fixed position Pi of the centre of the target pattern on the display unit D0 and having a target vector $\overrightarrow{xi}$ which is determined as a function of the position Pi, and for each target Vi acquiring (206; 306) the corresponding measurement $K_i$ of the relative angular orientation of the tracking element relative to a reference direction DDP which is fixed relative to the platform of the aircraft, then
- calculating (208; 308) the relative orientation matrix M01 between the display unit D0 in the tilted position and the first tracking element D1 as the right matrix $\hat{D}$ solution of the equation system:

$$\hat{G}.\hat{K}_i\hat{D}.\vec{x}_i = \vec{y}_0 \text{ for i} = 1 \text{ to N,}$$

the vector $\overrightarrow{y_0}$ designating the vector in the inertial reference system of the platform corresponding to the intended target point in the outside real world and being unknown; and

the left matrix $\hat{G}$ being the relative orientation matrix M23 between the reference system of the second fixed element D2, connected to the platform of the aircraft and the reference system of the inertial attitude device D3, which is potentially incorrect but assumed to be constant as a function of time, and which, when it is unknown, requires at least four measurements $\hat{K}_i$.

11. Portable head-up display system in order to bring into conformity the display of control information of an aircraft on the display unit with the outside real world according to claim 10, wherein:

the number N of measurements is greater than or equal to three and the left matrix $\hat{G}$ of relative orientation between the reference system D2 connected to the platform of the aircraft, and the reference system of the inertial unit D3 is known, and

the solution of the system of equations $\hat{G}.\hat{K}_i\hat{D}.\vec{x}_i = \vec{y}_0$ i varying from 1 to N, uses an iterative method and a recovery operator $\pi(.)$ which transforms any matrix A into a square 3x3 rotation matrix $\pi(A)$ which is closest to the sense of the least squares over all of the terms of the matrix $\pi(A)$-A over all the 3x3 rotation matrix, in order to determine the matrix $\hat{D}$ and the vector $\overrightarrow{y_0}$.

12. Portable head-up display system in order to bring into conformity the display of control information of an aircraft on a display unit with the outside real world according to claim 11, wherein:

- the step (208) of solution of the equation system comprises a first set of sub-steps involving:
- in a first initialisation sub-step (214), initialising a first sequence of right matrices $\{\hat{D}_{[s]}\}$, [s] designating the entire rank of path of the sequence $\{\hat{D}_{[s]}\}$, placing $\hat{D}_{[0]}$ to be equal to $I_3$, $I_3$ designating the identity matrix; then
- repeating a second iterative sub-step (216) which moves from the iteration [s] to [s+1] by calculating $\overrightarrow{y}_{[s+1]}$ then $\hat{D}_{[s+1]}$ using the following equations:

$$\vec{y}_{[s+1]} = \frac{\sum_{i \geq 1}\left(\widehat{G} \cdot \widehat{K}_i \cdot \widehat{D}_{[s]} \cdot \vec{x}_i\right)}{\left\|\sum_{i \geq 1}\left(\widehat{G} \cdot \widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^{\mathsf{T}} \cdot \widehat{G}^{\mathsf{T}} \cdot \vec{y}_{[s+1]} \cdot \vec{x}_i^{\mathsf{T}}\right)\right)$$

the sequence $\{\vec{y}_{[s]}\}$ designating a second sequence of external direction vectors, the sequences $\{\vec{y}_{[s]}\}$ and $\hat{D}_{[s]}$ converging respectively towards $\vec{y}_0$ and $\hat{D}$; then

- stopping in a third stoppage sub-step (218) the iterative method which is carried out via the second sub-step (216) when the limits $\hat{D}$ and $\hat{G}$ are approximated with sufficient precision defined by one or two predetermined threshold values.

**13.** Portable head-up display system in order to bring into conformity the display of control information of an aircraft on a display unit with the outside real world according to claim 10, wherein:

the number N of measurements is greater than or equal to four and the left matrix $\hat{G}$ of relative orientation between the reference system D2 connected to the platform of the aircraft and the reference system connected to the inertial unit D3 is unknown, and
not seeking to determine the vector $\vec{y}_0$, the solution of the equation system: $\hat{G}.\hat{K}_i.\hat{D}.\vec{x}_i = \vec{y}_0$, i varying from 1 to N, corresponds to the solution of the system of equations: $\hat{K}_i.\hat{D}.\vec{x}_i = \vec{z}_0$ for i varying from 1 to 4, noting $\vec{z}_0 = \hat{G}^T \cdot \vec{y}_0$, which solution uses an iterative process and a recovery operator $\pi(.)$ which transforms any matrix A into a square 3x3 rotation matrix $\pi(A)$ closest to the sense of the least squares over all of the terms of the matrix $\pi(A)$-A over all of the 3x3 rotation matrix in order to determine the matrix $\hat{D}$.

**14.** Portable head-up display system in order to bring into conformity the display of control information of an aircraft on a display unit with the outside real world according to claim 13, wherein:

- the step (308) of solving the equation system comprises a second set (312) of sub-steps involving:
- in a fourth initialisation sub-step (314), initialising a first sequence of right matrices $\{\hat{D}_{[s]}\}$, [s] designating the entire rank of path of the sequence $\{\hat{D}_{[s]}\}$, placing $\hat{D}_{[0]}$ equal to $I_3$, $I_3$ designating the identity matrix; then
- repeating a fifth iterative sub-step (316) which moves from the iteration [s] to [s+1] by calculating the value $\vec{z}_{[s+1]}$, then the value $\hat{D}_{[s+1]}$ of the first matrix sequence using the following equations:

$$\vec{z}_{[s+1]} = \frac{\sum_{i \geq 1}\left(\widehat{K}_i \cdot \widehat{D}_{[s]} \cdot \vec{x}_i\right)}{\left\|\sum_{i \geq 1}\left(\widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^{\mathsf{T}} \cdot \vec{z}_{[s+1]} \cdot \vec{x}_i^{\mathsf{T}}\right)\right)$$

the sequence $\{\vec{z}_{[s]}\}$ designating a second auxiliary vector sequence and the sequence $\{\hat{D}_{[s]}\}$ converging towards $\dot{\hat{D}}$; then

stopping in a sixth stoppage sub-step (318) the iterative process carried out via the fifth sub-step (316) when the limit $\dot{\hat{D}}$ is approximated with sufficient precision defined by a predetermined threshold value.

FIG.1

EP 3 502 842 B1

202

FIG.2

302

304

306

308

312

314

316

318

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015165838 A1

- US 20150317838 A1

**Littérature non-brevet citée dans la description**

- **TUCERAN et al.** Single point active alignment method (SPAAM) for optical see-through HMD calibration for AR. *Proceedings of the IEEE and ACM International Symposium on Augmented Reality (ISAR 2000),* 05 Octobre 2000